# EUROPEAN PATENT APPLICATION

(11) **EP 4 572 435 A1**
(43) Date of publication of application: **18.06.2025**
(21) Application number: 22955003.3
(22) Date of filing: 10.08.2022
(51) Int. Cl.: H04W 56/00, H04W 36/28, H04W 76/15

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/030658
(87) International publication number: WO 2024/034087

(57) **Abstract**

A terminal according to one aspect of the present disclosure includes: a receiving section that receives configuration information related to a plurality of serving cells and candidate cells associated with the plurality of serving cells respectively; and a control section that controls, when configuration of a timing advance group (TAG) ID is supported for the plurality of serving cells and the candidate cells, UL transmission, based on the timing advance group ID. One primary TAG or a plurality of primary TAGs are configured for the plurality of serving cells and the candidate cells.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is assumed that, in future radio communication systems (for example, radio communication systems of Rel. 16/5G or later), communication is controlled based on inter-cell mobility with a plurality of cells including a non-serving cell or inter-cell mobility using a plurality of transmission/reception points (for example, multi-TRP (MTRP)).

However, in a case of performing UL transmission to a plurality of transmission/reception points, how to control the UL transmission (for example, control of timing advance and the like) is a problem. Unless UL transmission to each transmission/reception point is appropriately controlled, quality of communication using a plurality of transmission/reception points may degrade.

The present disclosure has been made in view of this respect, and an object of the present disclosure is to provide a terminal, a radio communication method, and a base station that enable appropriate control of UL transmission even when communication is performed by using a plurality of transmission points.

### Solution to Problem

A terminal according to one aspect of the present disclosure includes: a receiving section that receives configuration information related to a plurality of serving cells and candidate cells associated with the plurality of serving cells respectively; and a control section that controls, when configuration of a timing advance group (TAG) ID is supported for the plurality of serving cells and the candidate cells, UL transmission, based on the timing advance group ID. One primary TAG or a plurality of primary TAGs are configured for the plurality of serving cells and the candidate cells.

### Advantageous Effects of Invention

According to one aspect of the present disclosure, even when communication is performed by using a plurality of transmission points, UL transmission can be appropriately controlled.

### Brief Description of Drawings

[FIG. 1] FIG. 1A and FIG. 1B are diagrams to show examples of inter-cell mobility.
[FIG. 2] FIG. 2 is a diagram to show examples of switching between a serving cell and an additional cell by L1/L2 signaling.
[FIG. 3] FIG. 3 is a diagram to show an example of configuration examples 1 to 3 when candidate cells are supported.
[FIG. 4] FIG. 4A to FIG. 4C are diagrams to show respective examples of a case where switching with candidate cells/a candidate cell group by L1/L2 signaling is performed in configuration examples 1 to 3 when candidate cells are supported.
[FIG. 5] FIG. 5 is a diagram to show an example of timing advance groups (TAGs) to which cells included in a cell group belong.
[FIG. 6] FIG. 6 is a diagram to show an example of a MAC CE for timing advance command.
[FIG. 7] FIG. 7 is a diagram to show an example of configuration of TAGs when association of TAG IDs with candidate cells is supported.
[FIG. 8] FIG. 8 is a diagram to show an example of configuration example 1 according to a first embodiment.
[FIG. 9] FIG. 9 is a diagram to show an example of configuration of PTAGs according to the first embodiment.
[FIG. 10] FIG. 10 is a diagram to show an example of configuration of TAG IDs at the time of SpCell switching according to the first embodiment.
[FIG. 11] FIG. 11 is a diagram to show another example of the configuration of TAG IDs at the time of SpCell switching according to the first embodiment.
[FIG. 12] FIG. 12A and FIG. 12B are diagrams to show examples of restriction on TAG configuration according to the first embodiment.
[FIG. 13] FIG. 13 is a diagram to show an example of configuration example 2 according to a second embodiment.
[FIG. 14] FIG. 14 is a diagram to show an example of configuration of a PTAG according to the second embodiment.
[FIG. 15] FIG. 15 is a diagram to show an example of configuration of TAG IDs at the time of SpCell switching according to the second embodiment.
[FIG. 16] FIG. 16 is a diagram to show an example of restriction on TAG configuration according to the second embodiment.
[FIG. 17] FIG. 17 is a diagram to show an example of configuration example 3 according to a third embodiment.
[FIG. 18] FIG. 18 is a diagram to show an example of configuration of PTAGs according to the third embodiment.
[FIG. 19] FIG. 19 is a diagram to show an example of restriction on TAG configuration according to the third embodiment.
[FIG. 20] FIG. 20 is a diagram to show an example of a schematic structure of a radio communication system according to one embodiment.
[FIG. 21] FIG. 21 is a diagram to show an example of a structure of a base station according to one embodiment.
[FIG. 22] FIG. 22 is a diagram to show an example of a structure of a user terminal according to one embodiment.
[FIG. 23] FIG. 23 is a diagram to show an example of a hardware structure of the base station and the user terminal according to one embodiment.
[FIG. 24] FIG. 24 is a diagram to show an example of a vehicle according to one embodiment.

### Description of Embodiments

### (TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a given signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a given channel/signal, and this RS may be referred to as a QCL source of QCL type X in the TCI state.

### (Inter-cell Mobility)

For NR, it is studied that one or a plurality of transmission/reception points (TRPs) (multi-TRP (MTRP)) perform DL transmission to a UE. It is also studied that the UE performs UL transmission to the one or plurality of TRPs.

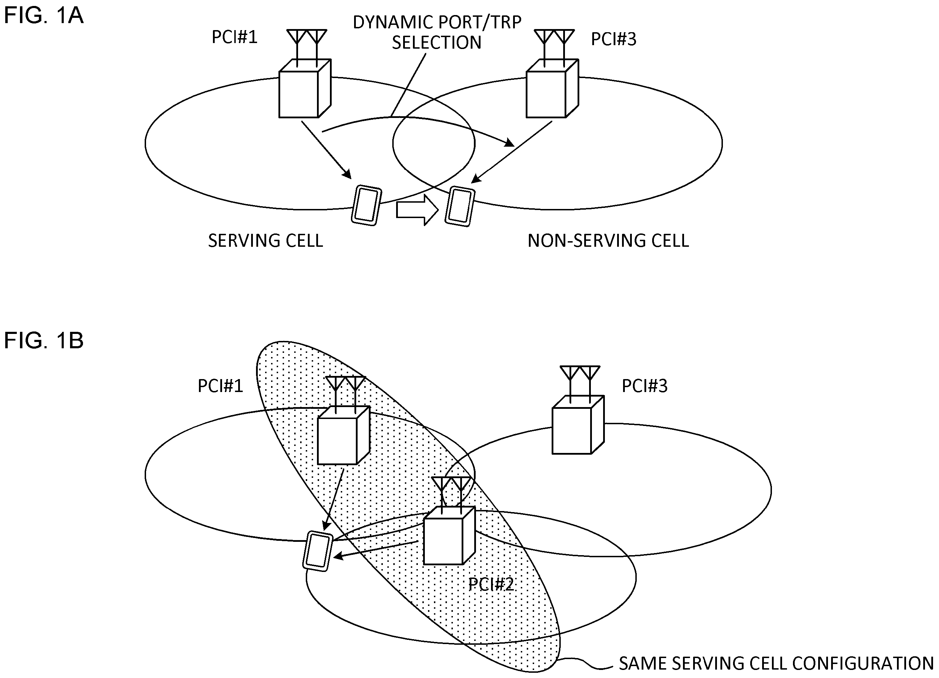

It is considered that a UE receives channels/signals from a plurality of cells/TRPs in inter-cell mobility (for example, L1/L2 inter cell mobility) (see FIGS. 1A and 1B).

FIG. 1A shows an example of inter-cell mobility with cells including a non-serving cell (for example, Single-TRP inter-cell mobility). A UE may be configured with one TRP (or a single TRP) in each cell. Here, shown is a case where the UE receives channels/signals from a base station/TRP of cell #1 being a serving cell, and a base station/TRP of cell #3 being not a serving cell (non-serving cell). For example, this corresponds to a case where the UE switches from cell #1 to cell #3 (for example, fast cell switch).

In this case, selection of a port (for example, an antenna port)/TRP may be performed dynamically. The selection of a port (for example, an antenna port)/TRP may be performed based on a TCI state indicated or updated by DCI/MAC CE. Here, shown is a case of supporting configuration of different physical cell IDs (for example, PCIs) for cell #1 and cell #3.

FIG. 1B shows an example of a multi-TRP scenario (for example, inter-cell mobility in a case of using multi-TRP (Multi-TRP inter-cell mobility)). A UE may be configured with a plurality of (for example, two) TRPs (or different CORESET pool indices) in each cell. Here, shown is a case where the UE receives channels/signals from TRP #1 and TRP 2. Here, also shown is a case where TRP #1 corresponds to physical cell ID (PCI) #1 and TRP #2 corresponds to PCI #2.

The multi-TRP (for example, TRPs #1 and #2) may be connected via ideal/non-ideal backhaul to exchange information, data, and the like. Each TRP of the multi-TRP may transmit the same or a different codeword (Code Word (CW)) and the same or a different layer. As one mode of multi-TRP transmission, non-coherent joint transmission (NCJT) may be employed as shown in FIG. 1B. Here, shown is a case where NCJT is performed between TRPs corresponding to different PCIs. Note that the same serving cell configuration may be applied/configured for TRP #1 and TRP #2.

It may be defined that a plurality of PDSCHs (multi-PDSCH) subjected to NCJT partially or completely overlap with respect to at least one of time and frequency domains. In other words, a first PDSCH from TRP #1 and a second PDSCH from TRP #2 may overlap in terms of at least one of time and frequency resources. The first PDSCH and the second PDSCH may be used for transmission of the same TB or may be used for transmission of different TBs.

The first PDSCH and the second PDSCH may be may be assumed not to be in a quasi-co-location (QCL) relationship (not to be quasi-co-located). Reception of the multi-PDSCH may be interpreted as simultaneous reception of PDSCHs of a QCL type other than a given QCL type (for example, QCL type D).

A plurality of PDSCHs (which may be referred to as multi-PDSCH (multiple PDSCHs)) from the multi-TRP may be scheduled by using one piece of DCI (single DCI (S-DCI, single PDCCH)) (single-master mode). The one piece of DCI may be transmitted from one TRP of the multi-TRP. A structure using one piece of DCI in multi-TRP may be referred to as single-DCI based multi-TRP (mTRP/MTRP).

The plurality of PDSCHs from the multi-TRP may be scheduled by using a plurality of respective pieces of DCI (multi-DCI (M-DCI), multi-PDCCH (multiple PDCCHs)). The plurality of pieces of DCI may be transmitted from respective TRPs of the multi-TRP. A structure using a plurality of pieces of DCI in multi-TRP may be referred to as multi-DCI based multi-TRP (mTRP/MTRP).

The UE may assume to transmit, to the different TRPs, separate CSI reports related to the respective TRPs. Such CSI feedback may be referred to as separate feedback, separate CSI feedback, and the like. In the present disclosure, "separate" may be interchangeably interpreted as "independent."

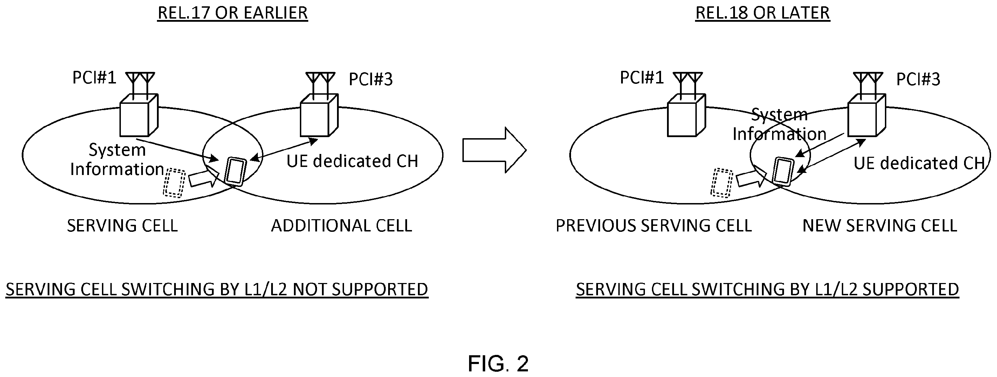

In Rel-17 NR, it is assumed that beam indication to TCI states associated with different PCIs by a MAC CE/DCI is supported. Meanwhile, in Rel-18 NR or later versions, it is assumed that serving cell switching (for example, indication of change of a serving cell to a cell having a different PCI) by L1/L2 signaling (for example, DCI/MAC CE) is supported (see FIG. 2).

### (Candidate Cell)

It is also assumed that, in inter-cell mobility, one or a plurality of candidate cells are configured/managed for each serving cell.

For example, one or more candidate cells with information being restricted (for example, a UE is notified only of one or some of parameters) may be configured in a given higher layer parameter (for example, ServingCellConfig) (Alt. 1). This may be configured similarly to inter-cell beam management (inter-cell BM) for existing systems (for example, Rel. 17).

Alternatively, a complete configuration (for example, ServingCellConfig) of one or more candidate cells may be configured, and the candidate cell(s) may be associated with each serving cell (Alt. 2). For example, a framework for carrier aggregation configuration (for example, CA configuration framework) or a framework for CHO (Conditional Handover) /CPC (Conditional PSCell Change) configuration may be reused.

In Alt. 1/2, activation/deactivation of a candidate cell(s) may be controlled by a MAC CE/DCI.

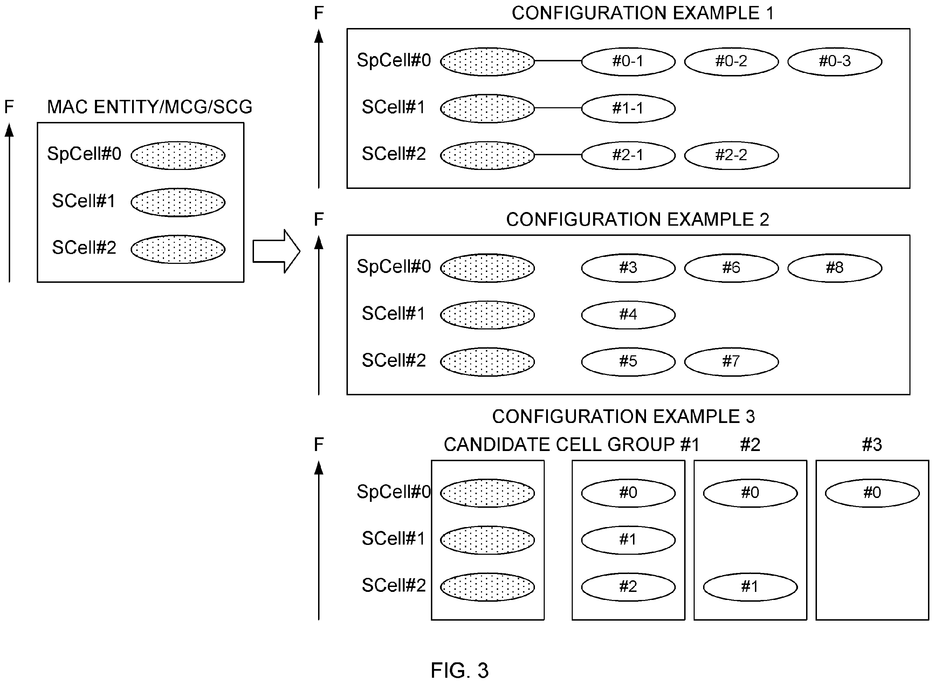

As configuration of candidate cells, at least one of configuration example 1 to configuration example 3 below may be used (see FIG. 3). Here, shown are examples of configuration/association of candidate cells (or additional cells) for serving cells/cell group when SpCell #0, SCell #1, and SCell #2 are configured as the serving cells. Configuration example 1 to configuration example 3 below are examples, and the number of cells, association for each cell, and the like are not limited to these and may be changed appropriately. Alternatively, another configuration example(s) may be supported/employed in addition to/instead of configuration example 1 to configuration example 3.

Configuration example 1 shows a case where one or more candidate cells are associated with/configured for each serving cell (see FIG. 3). Specifically, shown is a case where candidate cells #0-1, #0-2, and #0-3 are associated with SpCell #0, candidate cell #1-1 is associated with SCell #1, and candidate cells #2-1 and #2-2 are associated with SCell #2. Information related to this association may be configured for/indicated to a UE by a base station by RRC/MAC CE/DCI.

Configuration example 2 shows a case where candidate cells are associated with/configured for a MAC entity/MCG/SCG (see FIG. 3). Specifically, shown is a case where candidate cells #3 to #8 are associated with the MAC entity/MCG/SCG. In this case, instead of a candidate cell(s) being associated with each serving cell, the candidate cells are configured for the MAC entity or cell group (for example, an MCG/SCG). Information related to a candidate cell(s) to be configured for each cell may be configured for/indicated to a UE by a base station by RRC/MAC CE/DCI.

In configuration example 3, one or more candidate cell groups may be configured (see FIG. 3). Specifically, shown is a case where candidate cell group #1 including candidate cells #0 to #2, candidate cell group #2 including candidate cells #0 and #1, and candidate cell group #3 including candidate cell #0 are configured. Each candidate cell group includes one or more candidate cells. Each candidate cell included in the candidate cell group may be associated with at least one serving cell. Information related to the candidate cell(s) may be configured for/indicated to a UE by a base station by RRC/MAC CE/DCI.

In existing systems (for example, Rel. 17), L1 beam indication for a TCI state related to an additional PCI (or an additional cell) (for example, indication by a TCI state field of DCI) is supported.

It is assumed, in Rel. 18 or later versions, that a new L1/L2 signal (for example, DCI/MAC CE) indicating switching of a serving cell (for example, serving cell switch) is supported. It is assumed that, as the indication, at least one of implicit indication and explicit indication is supported. The implicit indication may mean that a given CORESET is updated to a TCI state associated with an additional PCI by a MAC CE, for example. The explicit indication may mean that cell switching is directly indicated by DCI/MAC CE.

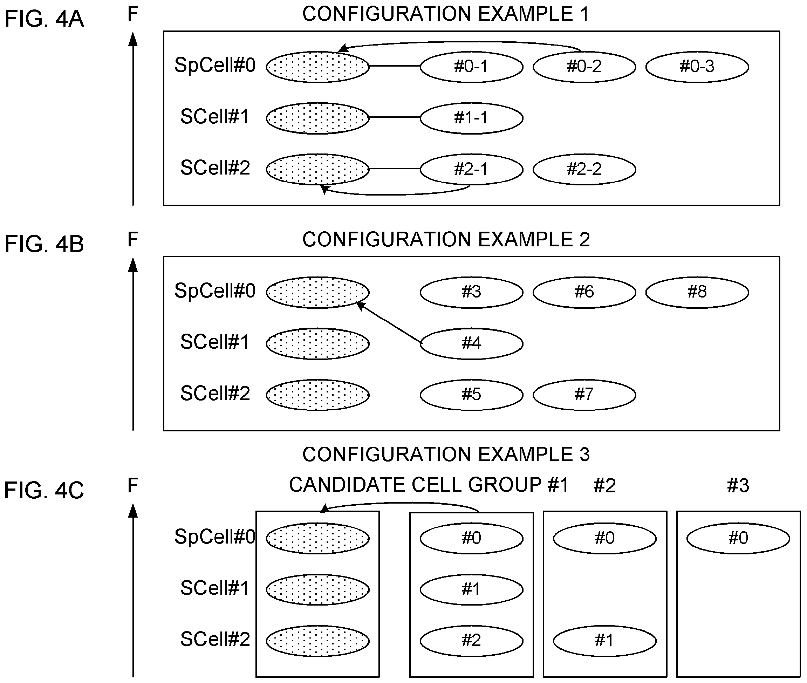

For example, in configuration example 1 of candidate cells, a given candidate cell may be specified as a serving cell (or indicated for switching with a serving cell) via L1/L2 signaling. FIG. 4A shows a case where candidate cell #0-2 turns to be an SpCell of the MCG/SCG (SpCell #0 and candidate cell #0-2 are switched) by L1/L2 signaling. Also shown is a case where candidate cell #2-1 turns to be an SCell of an MCG/SCG (SCell #2 and candidate cell #2-1 are switched) by L1/L2 signaling.

Alternatively, in configuration example 2 of candidate cells, a given candidate cell may be specified as a serving cell (or indicated for switching with a serving cell) via L1/L2 signaling. FIG. 4B shows a case where candidate cell #4 turns to be an SpCell of an MCG/SCG (SpCell #0 and candidate cell #4 are switched) by L1/L2 signaling.

Alternatively, in configuration example 3 of candidate cells, a given candidate cell group (or one or more candidate cells included in the given candidate cell group) may be changed/updated to a serving cell group via L1/L2 signaling. FIG. 4C shows a case where candidate cell group #1 (or candidate cells #0 to #2 included in candidate cell group #1) turns to be a serving cell group (or the serving cell group and candidate cell group #1 are switched) by L1/L2 signaling.

### (Timing Advance Group)

When a plurality of TRPs are used, there are some cases where the distance between a UE and each TRP is different. The plurality of TRPs may be included in the same cell (for example, a serving cell). Alternatively, among the plurality of TRPs, a given TRP corresponds to the serving cell, while the other TRP(s) may correspond to a non-serving cell(s). In this case, it is also assumed that the distance between each TRP and the UE is different.

In existing systems, transmission timing of a UL (Uplink) channel and/or a UL signal (UL channel/signal) is adjusted by timing advance (TA). Reception timing of a UL channel/signal from a different user terminal (UE) is adjusted on the radio base station (also referred to as a TRP (Transmission and Reception Point), gNB (gNodeB), and the like)) side.

A UE may employ timing advance for each timing advance group (TAG) (multiple timing advances) configured in advance to perform timing control for UL transmission.

When the multiple timing advances is employed, timing advance groups (TAGs) classified according to transmission timing are supported. The UE may control UL transmission timing in each TAG by assuming that the same TA offset (or TA value) is used for each TAG. In other words, the TA offset may be configured independently for each TAG.

When the multiple timing advances are employed, the UE independently adjusting transmission timing for the cells belonging to each TAG enables matching at a radio base station in terms of timing of uplink signal reception from the UE even when a plurality of cells are used.

A TAG (for example, serving cells belonging to the same TAG) may be configured by a higher layer parameter. The same timing advance value may be applied to the serving cells belonging to the same TAG (for example, serving cells configured with UL). A timing advance group including an SpCell of a MAC entity may be referred to as a primary timing advance group (PTAG), and a TAG other than the PTAG may be referred to as a secondary timing advance group (STAG). The maximum number of TAGs may be X (for example, X = 4) for each cell group (MCG/SCG).

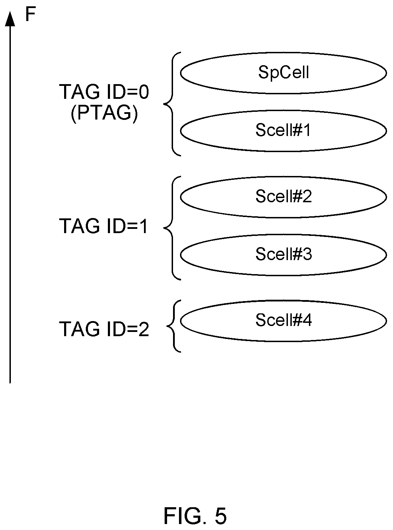

In existing systems (for example, Rel-16 NR), configuration of four TAGs at maximum (for example, MCG/SCG) is supported for each cell group (see FIG. 5). FIG. 5 shows a case where three TAGs are configured for a cell group including an SpCell and SCells #1 to #4. Here, shown is a case where the SpCell and SCell #1 belong to a first TAG (PTAG or TAG #0), SCell #2 and SCell #3 belong to a second TAG (TAG #1), and SCell #4 belongs to a third TAG (TAG #2).

A UE may be notified of a timing advance command (TA command) by using a MAC control element (for example, a MAC CE). The TA command is a command that indicates an uplink channel transmission timing value and is included in the MAC control element. The TA command is signaled from a radio base station to the UE on a MAC layer. The UE controls a given timer (for example, a TA timer), based on reception of the TA command.

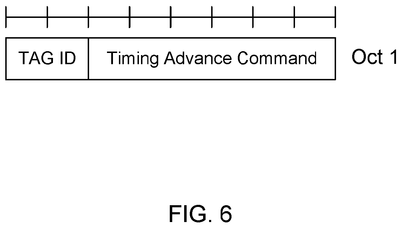

A MAC CE for timing advance command may have a structure including a field for timing advance group index (for example, TAG ID) and a field for timing advance command (see FIG. 6). The TAG ID field is used for indication of the TAG ID of an addressed TAG. The timing advance command field may indicate an index value T_{A} (0, 1, 2, ... 63) to be used for control of the amount of timing adjustment to be applied by the MAC entity.

A parameter corresponding to each TAG ID may be configured by a higher layer parameter. For example, a parameter such as a time alignment timer (for example, timeAlignmentTimer) corresponding to each TAG ID may be configured. Alternatively, a TAG ID may be configured for each serving cell by a higher layer parameter (for example, tag-ID included in ServingCellConfig). Note that each TAG ID/parameter may be updated by a MAC CE after being configured by a higher layer parameter.

The time alignment timer may be maintained for UL time alignment. In Rel. 17, a time alignment timer may be configured/associated for each TAG. When the UE has received a MAC CE for timing advance command (for example, a TAC MAC CE), the UE starts or restarts a time alignment timer related to each indicated timing advance group (for example, TAG).

When a MAC entity receives the TAC MAC CE, and a given value (N_{TA}) is maintained for the indicated TAG, the MAC entity uses the timing advance command for the indicated TAG or starts or restarts the time alignment timer related to the indicated TAG. The given value (N_{TA}) may be timing advance between DL and UL.

Operation when the time alignment timer expires may be defined separately for a PTAG and an STAG. Note that a timing advance group (TAG) including an SpCell of a MAC entity may be referred to as a primary timing advance group (PTAG), and a TAG other than the PTAG may be referred to as a secondary timing advance group (STAG).

For example, in Rel. 17, given operation for PTAG is employed when a timing advance timer corresponding to a PTAG expires, and given operation for STAG may be employed when a timing advance timer for STAG expires.

For example, when a time alignment timer expires, the following operation (for example, the given operation for PTAG/given operation for STAG) may be performed.

### {Given Operation for PTAG}

In a case where the time alignment timer is associated with a PTAG,
- flush all the HARQ buffers of all serving cells.
- notify RRC of release of a PUCCH, if configured, for all the serving cells.
- notify RRC of release of an SRS, if configured.
- clear all configured DL assignments and configured UL assignments.
- clear a PUSCH resource for semi-persistent CSI reporting.
- cause all running time alignment timers to expire.
- maintain N_{TA} of all TAGs.

### {Given Operation for STAG}

In a case where the time alignment timer is associated with an STAG, for all serving cells belonging to the TAG,
- flush all HARQ buffers.
- notify RRC of release of a PUCCH, if configured.
- notify RRC of release of an SRS, if configured.
- clear all configured DL assignments and UL assignments.
- clear a PUSCH resource for semi-persistent CSI reporting.
- maintain N_{TA} of the TAG.

It is also assumed that, in future radio communication systems, UL transmission is controlled based on timing advance for a serving cell (or a TRP of the serving cell) and a non-serving cell/additional cell (or a TRP of the non-serving cell/additional cell) in inter-cell mobility. Alternatively, a case is assumed that, in future radio communication systems, a different TAG (or TAG-ID) is configured for each of one or more TRPs (for example, a plurality of TRPs having different PCIs) corresponding to a given cell (or CC). Alternatively, a case is assumed that different TRPs corresponding to a given cell share a common TAG.

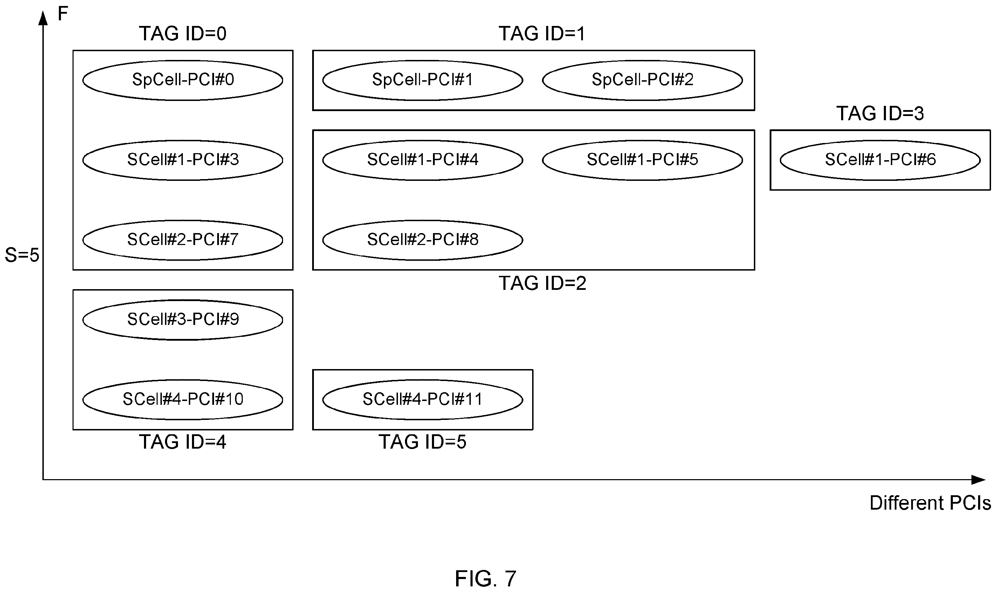

FIG. 7 is a diagram to show an example of configuration of TAGs each being for a plurality of cells (or TRPs) having different PCIs.

It is also assumed that M PCIs (for example, a serving cell + candidate cells associated with the serving cell) is configurable at maximum per CC and that configuration of N TAG(s) (for example, N ≤ M) at maximum is supported for the maximum M PCIs. In this case, one or a plurality of PCIs may be associated with one TAG.

For up to S serving cell(s) (or for S serving cell(s) at maximum) in a cell group, one or a plurality of PCIs may be associated with one TAG. In this case, T TAG(s) at maximum may be configured in consideration of one PCI per CC (case 1). In other words, (T × N) TAG(s) at maximum may be configured for the max (M × S) cells. Alternatively, up to U TAG(s) at maximum may be configured for the max (M × S) cells (case 2).

### {Issue 1}

When one PCI is assumed per CC, T TAG(s) (T = 3 in FIG. 7) at maximum may be configured for each of all carriers (case 1). Alternatively, up to U TAG(s) (U = 6 in FIG. 7) in total may be configured (case 2).

Meanwhile, when each candidate cell shown in configuration example 1 to configuration 3 of serving cells/candidate cells can be associated with a TAG, how to define or configure a PTAG(s)/STAG(s) is a problem. Moreover, how to define or configure TAG IDs is a problem.

In existing systems (for example, Rel-17 or earlier versions), configuration of one PTAG and three STAGs at maximum for one cell group (for example, MCG/SCG) is supported. In a case of the PTAG, TAG ID = 0 holds. A possibility is also conceivable, for L1/L2 inter-cell mobility, that definition of the PTAG and the TAG ID are changed. Moreover, how to control update of the PTAG and the TAG ID after switching of an SpCell by L1/L2 signaling (for example, SpCell switch) (with/without update or an update method in a case with update) is a problem

### {Issue 2}

When a time alignment timer for a TAG expires and only a candidate cell(s) (no serving cell) is included in the TAG, how to control UE operation is a problem. For example, even if time alignment of a candidate cell is lost, the serving cell continues to function, and hence whether to perform flush of an HARQ buffer and the like is a problem.

### {Issue 3}

How to control operations of cells sharing the same TAG ID, for example, whether or not restriction is configured for the cells sharing the same TAG ID, is a problem.

The inventors of the present invention focused on a respect that at least one of issue 1 to issue 3 above occurs when one or more candidate cells are associated with/configured for a serving cell/MAC entity/cell group, studied timing advance control for a case where a candidate cell(s) is supported, and came up with the present embodiment. By timing advance control to be described in the present embodiment, at least one of issue 1 to issue 3 can be solved.

Embodiments according to the present disclosure will be described in detail with reference to the drawings as follows. Note that the aspects (for example, cases) below may each be employed individually, or may be employed in combination of at least two.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support, " "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the following embodiments, a "plurality of" and "two" may be interchangeably interpreted. A "TAG" and a "TAG ID" may be interchangeably interpreted. A "cell," a "CC," and a "carrier" may be interchangeably interpreted.

The following description may be applied in inter-cell mobility (for example, L1/L2 inter cell mobility) or may be applied in communication control other than inter-cell mobility.

### (Radio Communication Method)

When a TAG ID is associated with a candidate cell configured in addition to a serving cell, a UE may control UL transmission in the serving cell/candidate cell, based on the TAG ID. The UL transmission in the candidate cell may be UL transmission after switching between the serving cell (SpCell/SCell) and the candidate cell.

The UE may receive configuration information related to one or more serving cells and candidate cells associated with the one or more respective serving cells, by RRC/MAC CE/DCI. The UE may receive information related to at least one of a TAG corresponding to each serving cell and a TAG corresponding to each candidate cell, by RRC/MAC CE/DCI.

Alternatively, the UE may receive configuration information related to one or more serving cells belonging to a cell group and candidate cells associated with the cell group, by RRC/MAC CE/DCI. The UE may receive information related to at least one of a TAG corresponding to each serving cell and a TAG corresponding to each candidate cell, by RRC/MAC CE/DCI.

Alternatively, the UE may receive configuration information related to a plurality of serving cells belonging to a cell group, a candidate cell group(s), and a candidate cell(s) included in each candidate cell group, by RRC/MAC CE/DCI. The UE may receive information related to at least one of a TAG corresponding to each serving cell, a TAG corresponding to each candidate cell group, and a TAG corresponding to each candidate cell, by RRC/MAC CE/DCI.

When the UE is configured with each cell group/candidate cell/candidate cell group, the UE may employ at least one of a first embodiment to a third embodiment below, for TAG (for example, PTAG/STAG) configuration, TAG ID configuration, UE operation after cell switching, and the like. Note that the first embodiment to the third embodiment may be applied in combination appropriately.

### <First Embodiment>

In a first embodiment, an example of timing advance control (for example, definition/configuration of a TAG ID/PTAG/STAG) in a case where configuration example 1 of candidate cells is employed.

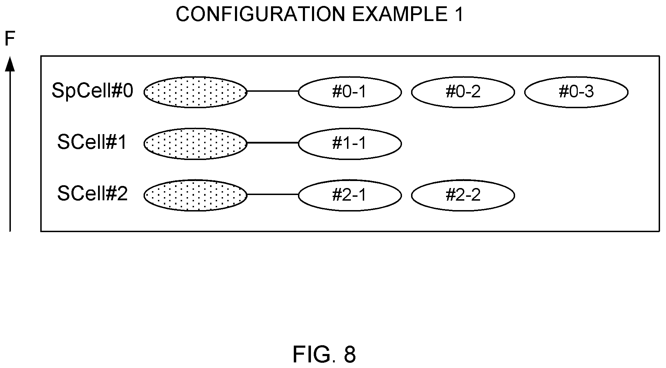

In the following description, a case where serving cells and one or more candidate cells associated with each serving cell are configured in a given cell group (for example, an MCG or an SCG) (configuration example 1) will be described. FIG. 8 shows a case where SpCell #0, SCell #1, and SCell #2 are configured as serving cells, candidate cells #0-1, #0-2, and #0-3 are associated with SpCell #0, candidate cell #1-1 is associated with SCell #1, and candidate cells #2-1 and #2-2 are associated with SCell #2. Note that the number of serving cells to be configured, the number of candidate cells associated with each serving cell, and the like are examples and are not restrictive.

### {Aspect 1-1}

For L1/L2 inter-cell mobility, when each candidate cell is associated with a TAG ID, at least one of option 1-1-1 and option 1-1-2 below may be used to control definition/configuration of a PTAG and an STAG.

### <<Option 1-1-1>>

Only one PTAG may be defined/configured. For example, a TAG including an SpCell among current serving cells may be defined/configured as a PTAG in a given cell group. The ID of the PTAG may be 0.

A TAG other than the one PTAG may be defined/configured as an STAG. When a candidate for a cell group is configured, only one PTAG may be defined/configured for the candidate cell group.

### <<Option 1-1-2>>

A plurality of PTAGs may be defined/configured. For example, a TAG including an SpCell among current serving cells and at least one TAG including a candidate cell(s) associated with the SpCell may be defined/configured as a PTAG in a given cell group. Note that the TAG including the SpCell being a serving cell may always be included in the PTAG, and one or more TAGs each including a candidate cell(s) associated with the SpCell may additionally constitute the PTAG. A TAG other than the PTAG may be defined/configured as an STAG.

When a plurality of PTAGs are defined/configured, IDs of the plurality of PTAGs may include 0 and another value(s). For example, the ID of the TAG including an SpCell being a serving cell is 0, and the other PTAG(s) may be a value(s) other than 0 (for example, 1). Alternatively, the ID of the PTAG including a specific candidate cell is 0, and the other PTAG(s) may be a value(s) other than 0 (for example, 1).

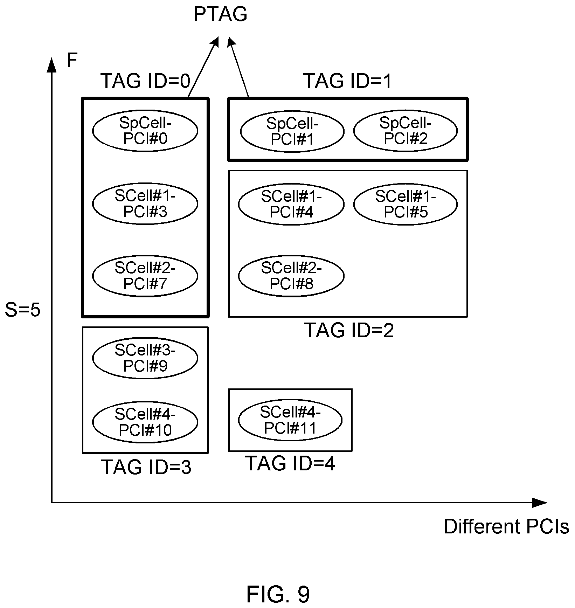

FIG. 9 shows an example of a case where a plurality of (here, two) PTAGs are configured. In FIG. 9, an SpCell (PCI #0), SCell #1 (PCI #3), SCell #2 (PCI #7), SCell #3 (PCI #9), and SCell #4 (PCI #10) are configured as serving cells. An SpCell (PCI #1) and an SpCell (PCI #2) being candidate cells are associated with the SpCell (PCI #0). SCell #1 (PCI #4) and SCell #1 (PCI #5) being candidate cells are associated with SCell #1 (PCI #3). SCell #2 (PCI #8) being a candidate cell is associated with SCell #2 (PCI #7). SCell #4 (PCI #11) being a candidate cell is associated with SCell #4 (PCI #10).

FIG. 9 also shows a case where the SpCell (PCI #0), SCell #1 (PCI #3), and SCell #2 (PCI #7) are included in the same TAG (TAG ID = 0), the SpCell (PCI #1) and the SpCell (PCI #2) are included in the same TAG (TAG ID = 1), SCell #1 (PCI #4), SCell #1 (PCI #5), and SCell #2 (PCI #8) are included in the same TAG (TAG ID = 2), and SCell #3 (PCI #9) and SCell #4 (PCI #10) are included in the same TAG (TAG ID = 3), and SCell #4 (PCI #11) is included in TAG ID-4.

In FIG. 9, a plurality of TAGs (here, TAG ID = 0 and TAG ID = 1) may be defined/configured as PTAGs, and the other TAGs may be defined/configured as STAGs. A case is also shown that the ID of the PTAG including the SpCell (PCI #0) being a serving cell is configured at 0 and the ID of the other PTAG is configured at 1.

At least one of the number of PTAGs configured in a cell group and a candidate cell(s) included in each PTAG may be defined in a specification or configured for/indicated to a UE by a base station by RRC/MAC CE/DCI.

### {Aspect 1-2}

When an SpCell is switched by L1/L2 signaling, at least one of option 1-2-1 and option 1-2-2 below may be employed after the switching (or after SpCell switching).

### <<Option 1-2-1>>

When one PTAG is defined/configured (for example, option 1-1-1), an original TAG (or a previous TAG) including a new SpCell (or after switching) is changed/updated to be a PTAG, and an original TAG including an old SpCell (or before the switching) may be changed/updated to be an STAG. In this case, TAG IDs may be determined based on at least one of option 1-2-1A and option 1-2-1B below.

### {{Option 1-2-1A}}

TAG IDs need not be changed. In this case, the TAG ID of the new PTAG may take a value (ID) other than 0 (Alt. 1A).

### {{Option 1-2-1B}}

TAG IDs may be updated. For example, the TAG ID of the new PTAG may be changed/updated to 0 (for example, TAG ID = 0). In this case, the original PTAG (new STAG) may be changed/updated to take a value (ID) other than 0. The TAG ID of the original PTAG (or the new STAG) may be determined based on at least one of Alt. 1B-1 to Alt. 1B-3 below.

### - Alt. 1B-1

When the original PTAG (or previous PTAG) turns to be an STAG, a new TAG ID may be configured by a higher layer parameter. When the original PTAG is switched to an STAG, a UE may use a TAG ID configured in advance for the STAG after the switching.

Alternatively, information related to a TAG ID used for each TAG after switching (for example, TAG switched to an STAG) may be indicated to the UE by using L1/L2 signaling indicating switching of an SpCell. For example, a plurality of candidates for the TAG ID may be configured by a higher layer parameter, and a specific TAG ID may be indicated by L1/L2 signaling (for example, DCI).

### - Alt. 1B-2

The original PTAG (or previous PTAG) may have the original TAG ID of the new PTAG. In other words, the new PTAG and the new STAG (or TAGs to be switched to each other) may exchange TAG IDs.

### - Alt. 1B-3

A UE may expect/assume that a base station transmits RRC/MAC CE/DCI to update TAG IDs, instead of updating/exchanging the TAG IDs autonomously.

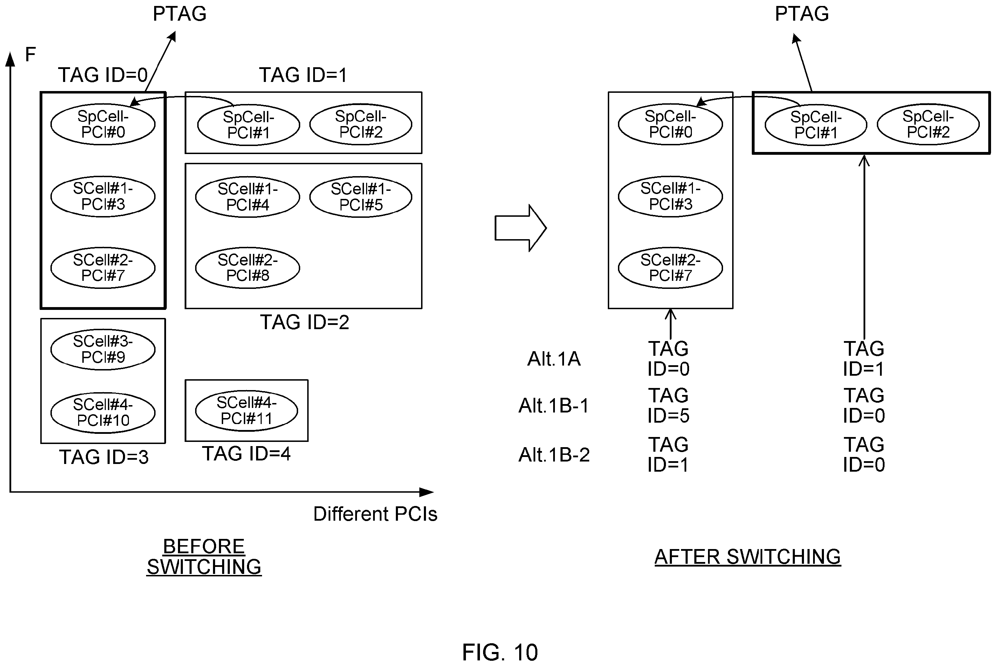

FIG. 10 shows an example of definition/configuration of TAG IDs after switching of SpCells in a case where one PTAG is defined/configured.

In FIG. 10, an SpCell (PCI #0), SCell #1 (PCI #3), SCell #2 (PCI #7), SCell #3 (PCI #9), and SCell #4 (PCI #10) are configured as serving cells. An SpCell (PCI #1) and an SpCell (PCI #2) being candidate cells are associated with the SpCell (PCI #0). SCell #1 (PCI #4) and SCell #1 (PCI #5) being candidate cells are associated with SCell #1 (PCI #3). SCell #2 (PCI #8) being a candidate cell is associated with SCell #2 (PCI #7). SCell #4 (PCI #11) being a candidate cell is associated with SCell #4 (PCI #10) .

FIG. 10 also shows a case where the SpCell (PCI #0), SCell #1 (PCI #3), and SCell #2 (PCI #7) are included in the same TAG (TAG ID = 0), the SpCell (PCI #1) and the SpCell (PCI #2) are included in the same TAG (TAG ID = 1), SCell #1 (PCI #4), SCell #1 (PCI #5), and SCell #2 (PCI #8) are included in the same TAG (TAG ID = 2), and SCell #3 (PCI #9) and SCell #4 (PCI #10) are included in the same TAG (TAG ID = 3), and SCell #4 (PCI #11) is included in TAG ID = 4.

Here, shown is a case where the candidate cell with PCI #1 turns to be an SpCell (or SpCell (PCI #0) and SpCell (PCI #1) are switched) by L1/L2 signaling.

In this case, the PTAG (original TAG ID = 0) including the SpCell (PCI #0) is changed to an STAG, and the STAG (original TAG ID = 1) including the SpCell (PCI #1) is changed to a PTAG.

When option 1-2-1A (or Alt. 1A) is employed, the ID of the TAG (original TAG ID = 0) including the SpCell (PCI #0) changed to the STAG maintains 0. In addition, the ID of the TAG (original TAG ID = 1) including the SpCell (PCI #1) changed to the PTAG maintains 1.

When option 1-2-1B (or Alt. 1B-1) is employed, the ID of the TAG (original TAG ID = 0) including the SpCell (PCI #0) changed to the STAG is changed to a value (here, 5) configured by an RRC parameter or the like in advance. In addition, the ID of the TAG (original TAG ID = 1) including the SpCell (PCI #1) changed to the PTAG is changed to 0.

When option 1-2-1B (or Alt. 1B-2) is employed, the TAG ID of the TAG (here, 0) including the SpCell (PCI #0) changed to the STAG and the original TAG ID (here, 1) of the TAG including the SpCell (PCI #1) changed to the PTAG are exchanged.

### <<Option 1-2-2>>

When a plurality of PTAGs are defined/configured (for example, option 1-1-2), a TAG(s) (for example, all the TAGs) including the SpCell or a candidate cell(s) associated with the SpCell may be updated/changed to a PTAG(s) after switching of the SpCell. In other words, the TAG including an SpCell to be a non-serving cell may maintain a PTAG. In this case, TAG IDs may be determined based on option 1-2-2A and option 1-2-2B.

### {{Option 1-2-2A}}

TAG IDs need not be changed. In this case, the ID of a TAG to be a PTAG newly (for example, the TAG including an SpCell to be a serving cell by switching) may take a value (ID) other than 0 (Alt. 1A). In contrast, the ID of the TAG including an SpCell to be a non-serving cell by switching may maintain 0. In this case, a PTAG concept and TAG IDs may be used without any change in L1/L2 mobility.

### {{Option 1-2-2B}}

TAG IDs may be updated. For example, the ID of a TAG to be a PTAG newly (for example, the TAG including an SpCell to be switched to a serving cell) may be changed/updated to 0 (for example, TAG ID = 0). In this case, the TAG ID of the original PTAG (or a non-serving PTAG) may take a value (ID) other than 0. The non-serving PTAG may mean a TAG including an SpCell to be a non-serving cell. The TAG ID of the original PTAG (or the non-serving PTAG) may be determined based on at least one of Alt. 2B-1 to Alt. 2B-3 below.

### - Alt. 2B-1

When the original PTAG (or previous PTAG) turns to be a non-serving PTAG, a new TAG ID may be configured by a higher layer parameter. When the original PTAG is switched to a non-serving PTAG, a UE may use a TAG ID configured in advance for the non-serving PTAG after the switching.

Alternatively, information related to a TAG ID used for each TAG after switching (for example, the TAG switched to an STAG) may be indicated to the UE by using L1/L2 signaling indicating switching of an SpCell. For example, a plurality of candidates for the TAG ID may be configured by a higher layer parameter, and a specific TAG ID may be indicated by L1/L2 signaling (for example, DCI).

### - Alt. 2B-2

The original PTAG (or a non-serving PTAG after switching) may have the TAG ID of the original ID of a new PTAG (or a serving PTAG after the switching). In other words, the new PTAG and the original PTAG (or TAGs to be switched to each other) may exchange TAG IDs.

### - Alt. 2B-3

A UE may expect/assume that a base station transmits RRC/MAC CE/DCI to update TAG IDs, instead of updating/exchanging the TAG IDs autonomously.

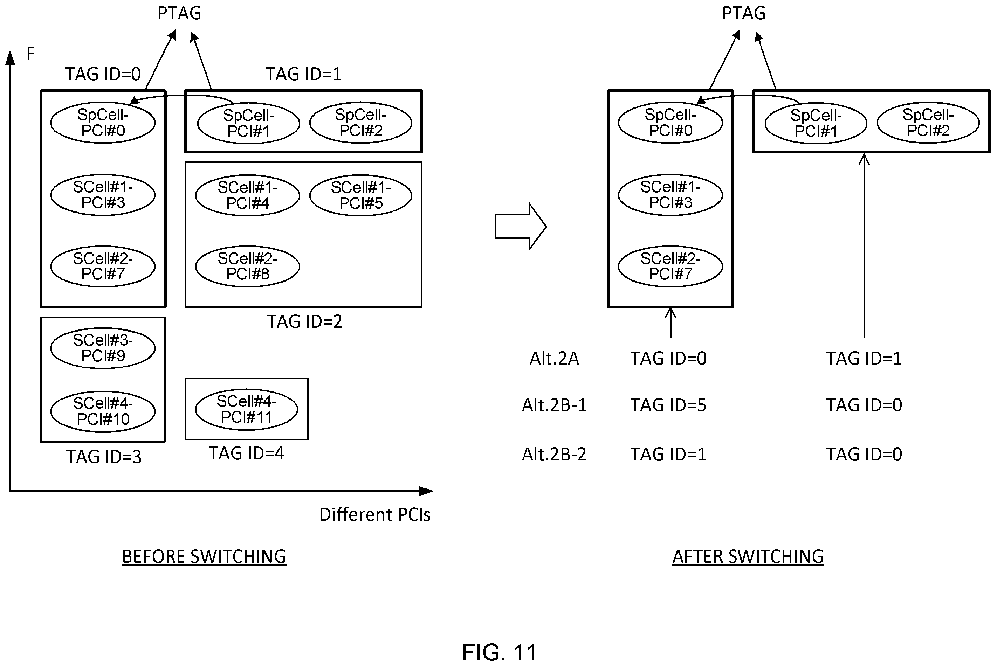

FIG. 11 shows an example of definition/configuration of TAG IDs after switching of an SpCell in a case where one PTAG is defined/configured.

In FIG. 11, an SpCell (PCI #0), SCell #1 (PCI #3), SCell #2 (PCI #7), SCell #3 (PCI #9), and SCell #4 (PCI #10) are configured as serving cells. An SpCell (PCI #1) and an SpCell (PCI #2) being candidate cells are associated with the SpCell (PCI #0). SCell #1 (PCI #4) and SCell #1 (PCI #5) being candidate cells are associated with SCell #1 (PCI #3). SCell #2 (PCI #8) being a candidate cell is associated with SCell #2 (PCI #7). SCell #4 (PCI #11) being a candidate cell is associated with SCell #4 (PCI #10) .

FIG. 11 also shows a case where the SpCell (PCI #0), SCell #1 (PCI #3), and SCell #2 (PCI #7) are included in the same TAG (TAG ID = 0), the SpCell (PCI #1) and the SpCell (PCI #2) are included in the same TAG (TAG ID = 1), SCell #1 (PCI #4), SCell #1 (PCI #5), and SCell #2 (PCI #8) are included in the same TAG (TAG ID = 2), and SCell #3 (PCI #9) and SCell #4 (PCI #10) are included in the same TAG (TAG ID = 3), and SCell #4 (PCI #11) is included in TAG ID = 4. A case is also shown that TAG ID = 0 and TAG ID = 1 are configured as PTAGs, and the other TAGs are configured as STAGs.

Here, shown is a case where the candidate cell with PCI #1 turns to be an SpCell (or SpCell (PCI #0) and SpCell (PCI #1) are switched) by L1/L2 signaling.

In this case, the TAG (original TAG ID = 0) including the SpCell (PCI #0) and the TAG (original TAG ID = 1) including the SpCell (PCI #1) turn to be PTAGs.

When option 1-2-2A (or Alt. 2A) is employed, the ID of the TAG (original TAG ID = 0) including the SpCell (PCI #0) changed to a non-serving PTAG maintains 0. In addition, the ID of the TAG (original TAG ID = 1) including the SpCell (PCI #1) changed to a serving PTAG maintains 1.

When option 1-2-2B (or Alt. 2B-1) is employed, the ID of the TAG (original TAG ID = 0) including the SpCell (PCI #0) changed to a non-serving PTAG is changed to a value (here, 5) configured by an RRC parameter or the like in advance. In addition, the ID of the TAG (original TAG ID = 1) including the SpCell (PCI #1) changed to a serving PTAG is changed to 0.

When option 1-2-2B (or Alt. 2B-2) is employed, the original TAG ID (here, 0) of the TAG including the SpCell (PCI #0) changed to the non-serving PTAG and the original TAG ID (here, 1) of the TAG including the SpCell (PCI #1) changed to the serving-PTAG are exchanged.

After SCell switching via L1/L2 signaling, a PTAG/STAG concept need not be changed. The ID of a TAG of an SCell (or an STAG) need not be changed. For example, after an SCell is switched by L1/L2 signaling, the ID of the TAG including the switched SCell may be maintained. When a TAG is a PTAG, the TAG may maintain being the PTAG even after switching. When a TAG is an STAG, the TAG may maintain being the STAG even after switching.

Aspect 1-2 may be applied to switch by L1/L2 signaling and cell group switch via L1/L2 signaling.

### {Aspect 1-3}

When a time alignment timer configured for each TAG expires, a UE performs given operation (or is defined/configured with given UE operation). Based on the number of PTAGs included in a cell group, option 1-3-1 or option 1-3-2 below may be employed.

### <<Option 1-3-1>>

When one PTAG is defined/configured (for example, option 1-1-1 above), only one PTAG is present in a cell group as in existing systems (for example, Rel. 17 or earlier versions). In this case, when a time alignment timer for the PTAG expires, the same operation as that in such an existing system may be applied to UE operation for the PTAG. Meanwhile, for an STAG, a plurality of (for example, two) different STAG types may be introduced.

For example, when the time alignment timer expires, different UE operations may be employed for STAG type 1 and STAG type 2. STAG type 1 (for example, a serving STAG) may mean an STAG including at least a serving cell (or a serving SCell).

STAG type 2 (for example, a non-serving STAG) may mean an STAG not including a serving cell (or including only a non-serving cell(s)/candidate cell(s)). The non-serving cell(s)/candidate cell(s) may be associated with a serving SpCell or a serving SCell.

In STAG type 1, when the time alignment timer of an STAG (for example, a serving STAG) expires, the same UE operation as that of the existing systems (for example, Rel. 17 or earlier versions) may be employed partially/entirely.

In STAG type 2, when the time alignment timer of an STAG (for example, a non-serving STAG) expires, a corresponding non-serving cell/candidate cell may be deactivated/made in-active (for example, deactivated/in-active). This is because UL synchronization becomes out of synchronization, which makes it difficult to schedule data transmission in the candidate cell for a UE (related serving cell maintains a function) and thereby causes the necessity that a PRACH is triggered for the candidate cell to obtain timing advance before the data transmission.

For example, when a time alignment timer expires, the following operation (for example, the given operation for PTAG/given operation for STAG) may be performed.

### {Given Operation for PTAG}

In a case where the time alignment timer is associated with a PTAG,
- flush all the HARQ buffers of all serving cells.
- notify RRC of release of a PUCCH, if configured, for all the serving cells.
- notify RRC of release of an SRS, if configured.
- clear all configured DL assignments and configured UL assignments.
- clear a PUSCH resource for semi-persistent CSI reporting.
- cause all running time alignment timers to expire.
- maintain N_{TA} of all TAGs.

### {Given Operation for STAG}

In a case where the time alignment timer is associated with an STAG including a serving cell(s) (for example, STAG type 1), for all the serving cell(s) belonging to the TAG,
- flush all HARQ buffers.
- notify RRC of release of a PUCCH, if configured.
- notify RRC of release of an SRS, if configured.
- clear all configured DL assignments and UL assignments.
- clear a PUSCH resource for semi-persistent CSI reporting.
- maintain N_{TA} of the TAG.
- apply the procedure above to a candidate cell(s) to which the corresponding serving cell(s) is associated (and may deactivate the corresponding candidate cell(s)/make the corresponding candidate cell(s) in-active).

In a case where the time alignment timer is associated with an STAG not including a serving cell(s) (or including a non-serving cell(s)/candidate cell(s)) (for example, STAG type 2), for all the non-serving cell(s)/candidate cell(s) belonging to the TAG,
- deactivate the candidate cell(s)/make the candidate cell(s) in-active.

### <<Option 1-3-2>>

When a plurality of PTAGs are defined/configured (for example, option 1-1-2 above), a plurality of (for example, two) PTAGs are present in a cell group different from existing systems (for example, Rel. 17 or earlier versions). In this case, for the PTAGs, a plurality of (for example, two) different PTAG types may be introduced. Meanwhile, for the STAGs, a plurality of (for example, two) different STAG types may be introduced.

For example, when the time alignment timer expires, different UE operations may be employed for PTAG type 1 and PTAG type 2. PTAG type 1 (for example, a serving PTAG) may mean a PTAG including at least a serving cell (or a serving SpCell).

PTAG type 2 (for example, a non-serving PTAG) may mean a PTAG not including an SpCell (or an SpCell to be a serving cell). In other words, a TAG of PTAG type 2 may include only a non-serving cell(s)/candidate cell(s) associated with the serving SpCell.

In PTAG type 1, when the time alignment timer of a PTAG (for example, a serving PTAG) expires, the same UE operation as that employed for a PTAG of the existing systems (for example, Rel. 17 or earlier versions) may be employed partially/entirely.

In PTAG type 2, when the time alignment timer of a PTAG (for example, a non-serving PTAG) expires, a corresponding non-serving cell/candidate cell may be deactivated/made in-active (for example, deactivated/in-active). This is because UL synchronization becomes asynchronous, which makes it difficult to schedule data transmission in the candidate cell for a UE and thereby causes the necessity that a PRACH is triggered for the candidate cell to obtain timing advance before the data transmission.

For an STAG (for example, STAG type 1/STAG type 2), UE operation shown in option 1-3-1 may be employed.

When a time alignment timer expires, the following operation (for example, the given operation for PTAG/given operation for STAG) may be performed.

### {Given Operation for PTAG}

In a case where the time alignment timer is associated with a PTAG including an SpCell (PTAG type 1),
- flush all the HARQ buffers of all serving cells.
- notify RRC of release of a PUCCH, if configured, for all the serving cells.
- notify RRC of release of an SRS, if configured.
- clear all configured DL assignments and configured UL assignments.
- clear a PUSCH resource for semi-persistent CSI reporting.
- cause all running time alignment timers to expire.
- maintain N_{TA} of all TAGs.

In a case where the time alignment timer is associated with a PTAG not including an SpCell (PTAG type 2),
- deactivate a corresponding candidate cell(s) (for example, the candidate cell(s) included in the PTAG)/make the candidate cell(s) in-active.

### {Given Operation for STAG}

In a case where the time alignment timer is associated with an STAG including a serving cell(s) (for example, STAG type 1), for all the serving cell(s) belonging to the TAG,
- flush all HARQ buffers.
- notify RRC of release of a PUCCH, if configured.
- notify RRC of release of an SRS, if configured.
- clear all configured DL assignments and UL assignments.
- clear a PUSCH resource for semi-persistent CSI reporting.
- maintain N_{TA} of the TAG.
- apply the procedure above to a candidate cell(s) to which the corresponding serving cell(s) is associated (and may deactivate the corresponding candidate cell(s)/make the corresponding candidate cell(s) in-active).

In a case where the time alignment timer is associated with an STAG not including a serving cell(s) (or including a non-serving cell(s)/candidate cell(s)) (for example, STAG type 2), for all the non-serving cell(s)/candidate cell(s) belonging to the TAG,
- deactivate the candidate cell(s)/make the candidate cell(s) in-active.

### {Aspect 1-4}

In aspect 1-4, an example of UE operation for a deactivated/in-active candidate cell(s) will be described.

When an SCell (for example, a serving SCell) is deactivated, a UE may perform the following UE operations.
- Transmit no SRS in the SCell.
- Report no CSI in the SCell.
- Transmit no UL-SCH in the SCell.
- Transmit no RACH in the SCell.
- Monitor no PDCCH in the SCell.
- Monitor no PDCCH in the SCell.
- Transmit no PUCCH in the SCell.

Meanwhile, a candidate cell (for example, a non-serving SCell) is deactivated, the UE may perform at least one of the following two options, option 1-4-1 and option 1-4-2.

Note that option 1-4-1 and option 1-4-2 may mean differences in UE operation from that for a deactivated SCell (for example, a serving SCell). Other UE operations (for example, operation of transmitting no SRS/UL-SCH/PUCCH, operation of monitoring no PDCCH) may be employed for the candidate cell.

### <<Option 1-4-1>>

The UE may perform CSI reporting on the deactivated candidate cell. The CSI reporting may be L1 measurement/reporting of a reference signal (RS) from the deactivated candidate cell.

### <<Option 1-4-2>>

The UE may transmit a PRACH in the deactivated candidate cell. Through this, effective timing advance for the candidate cell can be obtained.

Control of activation/deactivation of a candidate cell may be performed based on RRC/MAC CE/DCI/timer.

For example, for a candidate cell configured by an RRC parameter in advance, activation/deactivation may be indicated by using a new MAC CE. In configuration by an RRC parameter, the start state (for example, activated/deactivated) of each candidate cell may be configured.

Alternatively, a deactivation timer (for example, deactivationTimer) may be configured for each candidate cell/each candidate cell group. The deactivation timer may be configured as a cell deactivation timer (for example, CellDeactivationTimer) configured for each SCell in an existing system (for example, Rel. 17 or earlier versions). When the deactivation timer expires, the corresponding candidate cell may be deactivated.

### {Aspect 1-5}

In aspect 1-5, restriction on cells sharing the same TAG ID (or restriction on configuration of TAG IDs) will be described.

In TAG configuration, at least one restriction of option 1-5-1 and option 1-5-2 below may be applied.

### <<Option 1-5-1>>

Candidate cells of the same CC (or candidate cells associated with the same serving cell) may be configured not to be configured with the same TAG ID. In other words, only candidate cells associated with different CCs may be configured with the same TAG ID.

### <<Option 1-5-2>>

TAG IDs (0, 1, ...) may be assigned first to a specific cell (for example, a serving cell) and then to other cells (for example, candidate cells). Aspect 1-5 may be applied to aspect 1-1 to aspect 1-4.

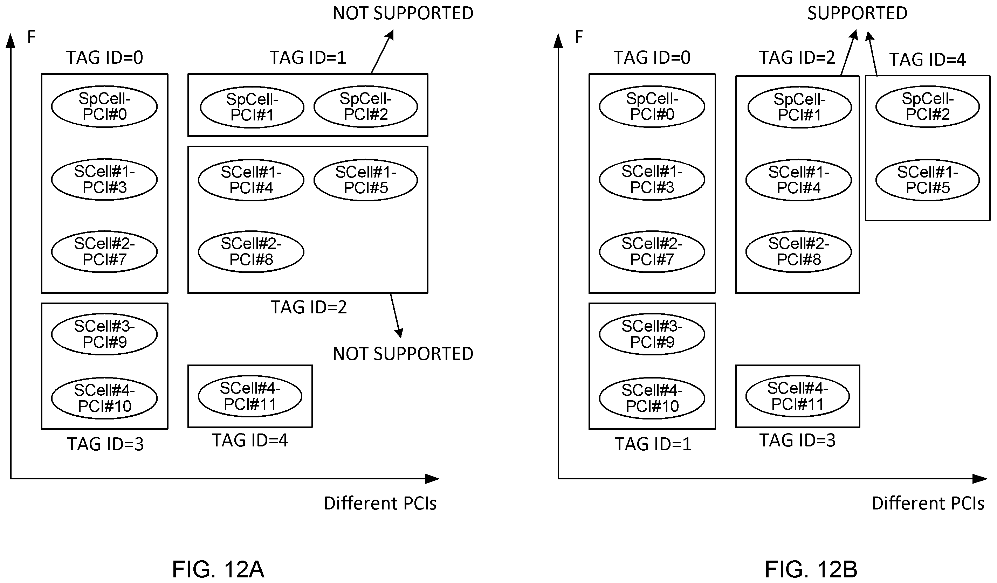

In FIGS. 12A and 12B, an SpCell (PCI #0), SCell #1 (PCI #3), SCell #2 (PCI #7), SCell #3 (PCI #9), and SCell #4 (PCI #10) are configured as serving cells. An SpCell (PCI #1) and an SpCell (PCI #2) being candidate cells are associated with the SpCell (PCI #0). SCell #1 (PCI #4) and SCell #1 (PCI #5) being candidate cells are associated with SCell #1 (PCI #3). SCell #2 (PCI #8) being a candidate cell is associated with SCell #2 (PCI #7). SCell #4 (PCI #11) being a candidate cell is associated with SCell #4 (PCI #10).

FIG. 12A also shows a case where the SpCell (PCI #0), SCell #1 (PCI #3), and SCell #2 (PCI #7) are included in the same TAG (TAG ID = 0), the SpCell (PCI #1) and the SpCell (PCI #2) are included in the same TAG (TAG ID = 1), SCell #1 (PCI #4), SCell #1 (PCI #5), and SCell #2 (PCI #8) are included in the same TAG (TAG ID = 2), and SCell #3 (PCI #9) and SCell #4 (PCI #10) are included in the same TAG (TAG ID = 3), and SCell #4 (PCI #11) is included in TAG ID = 4.

When the restriction of option 1-5-1 is applied, the same TAG ID cannot be configured for a plurality of candidate cells associated with the same serving cell. In this case, the candidate cell SpCell (PCI #1) and the candidate cell SpCell (PCI #2) cannot be included in the same TAG (here, TAG ID = 1). Similarly, the candidate cell SCell (PCI #4) and the candidate cell SCell (PCI #5) cannot be included in the same TAG (here, TAG ID = 2).

FIG. 12B shows an example of TAG assignment of a case where restrictions of option 1-5-1 and option 1-5-2 are applied. Here, a plurality of candidate cells associated with the same serving cell belong to different TAGs, and TAG IDs are assigned to the serving cells and thereafter to the candidate cells.

### <Second Embodiment>

In a second embodiment, an example of timing advance control (for example, definition/configuration of a TAG ID/PTAG/STAG) in a case where configuration example 2 of candidate cells is employed.

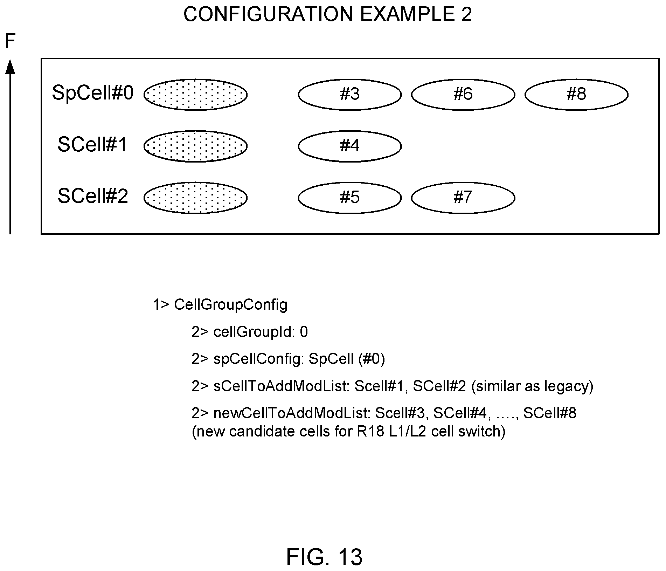

In the following description, a case where one or more candidate cells are configured for a given cell group (for example, an MCG or an SCG)/MAC entity (configuration example 2) will be described. FIG. 13 shows a case where SpCell #0, SCell #1, and SCell #2 are configured as serving cells, and candidate cells #3 to #8 are configured for a cell group. Note that the number of serving cells to be configured, the number of candidate cells, and the like are examples and are not restrictive.

By a given higher layer parameter (for example, CellGroupConfig), the ID of the cell group (here, 0), an SpCell configuration of the cell group (for example, spCellConfig), a list of SCells (for example, sCellToAddModList), and a list of candidate cells (or new cells/added cells) (for example, newCellToAddModList) may be configured for a UE.

### {Aspect 2-1}

For L1/L2 inter-cell mobility, when each candidate cell is associated with a TAG ID, definition/configuration of a PTAG and an STAG may be controlled by using option 2-1-1 below.

### <<Option 2-1-1>>

Only one PTAG may be defined/configured for each cell group. For example, a TAG including an SpCell among current serving cells may be defined/configured as a PTAG in a given cell group. The ID of the PTAG may be 0. A TAG other than the one PTAG may be defined/configured as an STAG.

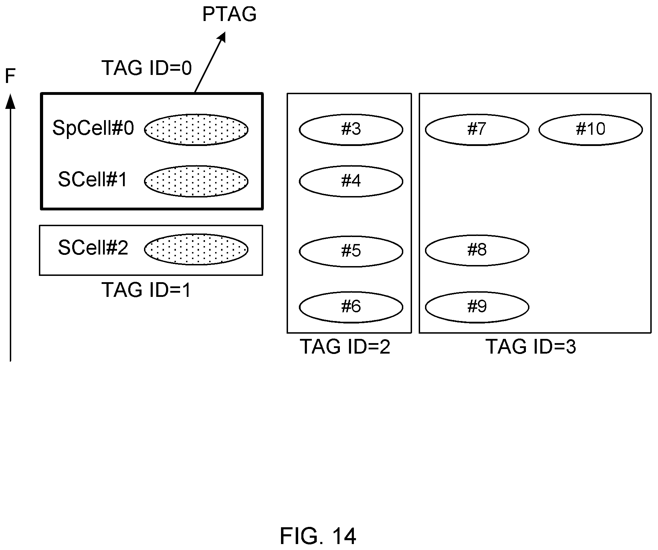

FIG. 14 shows an example of a case where one PTAG is configured for a given cell group (for example, an MCG or an SCG). In FIG. 14, SpCell #0, SCell #1, and SCell #2 are configured as serving cells. Moreover, candidate cells #2 to #10 are configured for the cell group (or the MAC entity/MCG/SCG). The candidate cells may each have the same frequency (or frequency band) as or a different frequency (or frequency band) from that of a corresponding one of the current serving cells.

In FIG. 14, SpCell #0 and SCell #1 are included in the same TAG (here, TAG ID = 0), and SCell #2 is included in a different TAG (here, TAG ID = 1). Candidate cells #3 to #6 are included in the same TAG (here, TAG ID = 2), and candidate cells #7 to #10 are included in the same TAG (here, TAG ID = 3). Note that the TAG to which each serving cell belongs, the TAG to which each candidate cell belongs, the number of TAGs to be configured, and the number of serving cells/candidate cells included in each TAG are examples and are not restrictive.

In FIG. 14, the TAG including SpCell #0 (here TAG ID = 0) may be a PTAG, and the other TAGs may be defined/configured as STAGs.

Note that a plurality of PTAGs may be defined/configured for each cell group. In this case, the description given in option 1-1-2 above may be applied to a candidate cell(s) to be in the PTAGs.

### {Aspect 2-2}

When an SpCell is switched by L1/L2 signaling, option 2-2-1 below may be employed after the switching (or after SpCell switching).

### <<Option 2-2-1>>

When one PTAG is defined/configured (for example, option 2-1-1), an original TAG (or a previous TAG) including a new SpCell (or after switching) is changed/updated to be a PTAG, and an original TAG including an old SpCell (or before the switching) may be changed/updated to be an STAG. In this case, TAG IDs may be determined based on at least one of option 2-2-1A and option 2-2-1B below.

### {{Option 2-2-1A}}

TAG IDs need not be changed. In this case, the TAG ID of the new PTAG may take a value (ID) other than 0 (Alt. 2A).

### {{Option 2-2-1B}}

TAG IDs may be updated. For example, the TAG ID of the new PTAG may be changed/updated to 0 (for example, TAG ID = 0). In this case, the original PTAG (new STAG) may be changed/updated to take a value (ID) other than 0. The TAG ID of the original PTAG (or the new STAG) may be determined based on at least one of Alt. 2B-1 to Alt. 2B-3 below.

### - Alt. 2B-1

When the original PTAG (or previous PTAG) turns to be an STAG, a new TAG ID may be configured by a higher layer parameter. When the original PTAG is switched to an STAG, a UE may use a TAG ID configured in advance for the STAG after the switching.

Alternatively, information related to a TAG ID used for each TAG after switching (for example, the TAG switched to an STAG) may be indicated to the UE by using L1/L2 signaling indicating switching of an SpCell. For example, a plurality of candidates for the TAG ID may be configured by a higher layer parameter, and a specific TAG ID may be indicated by L1/L2 signaling (for example, DCI).

### - Alt. 2B-2

The original PTAG (or previous PTAG) may have the original TAG ID of the new PTAG. In other words, the new PTAG and the new STAG (or TAGs to be switched to each other) may exchange TAG IDs.

### - Alt. 2B-3

A UE may expect/assume that a base station transmits RRC/MAC CE/DCI to update TAG IDs, instead of updating/exchanging the TAG IDs autonomously.

Meanwhile, when an SCell is switched via L1/L2 signaling, a PTAG/STAG concept need not be changed. In this case, change of TAG IDs and the like may be unnecessary.

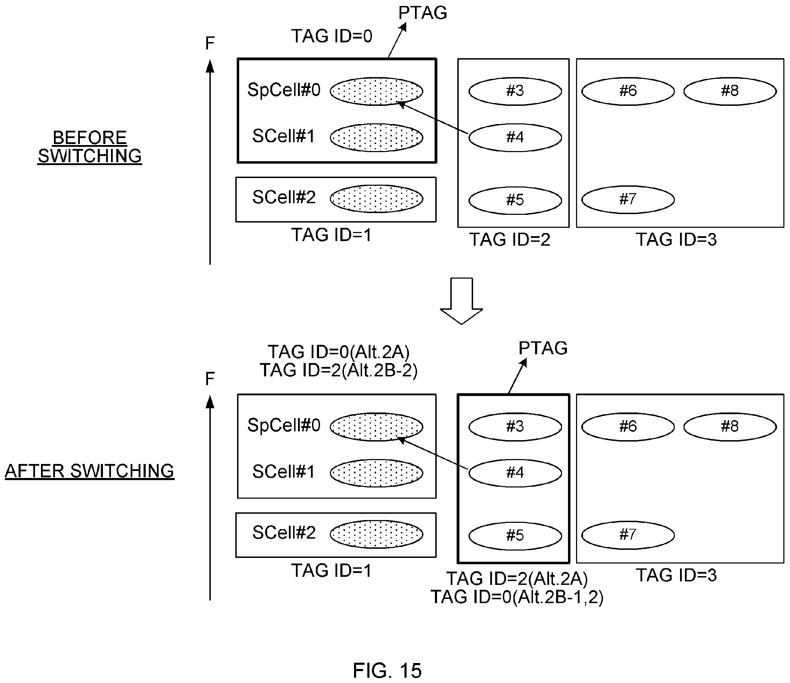

FIG. 15 shows an example of definition/configuration of TAG IDs after switching of an SpCell in a case where one PTAG is defined/configured.

FIG. 15 shows a case where SpCell #0, SCell #1, and SCell #2 are configured as serving cells, and candidate cells #2 to #10 are configured for a cell group (or a MAC entity/MCG/SCG).

In FIG. 15, before switching of an SpCell, SpCell #0 and SCell #1 are included in the same TAG (here, TAG ID = 0), and SCell #2 is included in a different TAG (here, TAG ID = 1). Candidate cells #3 to #6 are included in the same TAG (here, TAG ID = 2), and candidate cells #7 to #10 are included in the same TAG (here, TAG ID = 3).

Here, shown is a case where candidate cell #4 turns to be an SpCell (or serving SpCell) or where SpCell #0 and candidate cell #4 are switched, by L1/L2 signaling.

In this case, the PTAG (original TAG ID = 0) including SpCell #0 is changed to an STAG, and the STAG (original TAG ID = 2 including candidate cell #3 is changed/updated to a PTAG.

When option 2-2-1A (or Alt. 2A) is employed, the ID of the TAG (original TAG ID = 0) including SpCell #0 changed to the STAG maintains 0. In addition, the ID of the TAG (original TAG ID = 2) including candidate cell #3 changed to the PTAG maintains 2.

When option 2-2-1B (or Alt. 2B-1) is employed, the ID of the TAG (original TAG ID = 0) including SpCell #0 changed to the STAG is changed to a value (here, 5) configured by an RRC parameter or the like in advance. In addition, the ID of the TAG (original TAG ID = 1) including candidate cell #3 changed to the PTAG is changed to 0.

When option 2-2-1B (or Alt. 2B-2) is employed, the original TAG ID (here, 0) of the TAG including SpCell #0 changed to the STAG and the original TAG ID (here, 2) of the TAG including candidate cell #3 changed to the PTAG are exchanged.

### {Aspect 2-3}

When a time alignment timer configured for each TAG expires, a UE performs given operation (or is defined/configured with given UE operation).

When one PTAG is defined/configured for a cell group (for example, option 2-1-1), only one PTAG is present in the cell group as in existing systems (for example, Rel. 17 or earlier versions). In this case, when a time alignment timer for the PTAG expires, the same operation as that in such an existing system may be applied to UE operation for the PTAG. Meanwhile, for an STAG, a plurality of (for example, two) different STAG types may be introduced.

For example, when the time alignment timer expires, different UE operations may be employed for STAG type 1 and STAG type 2. STAG type 1 (for example, a serving STAG) may mean an STAG including at least a serving cell (or a serving SCell).

STAG type 2 (for example, a non-serving STAG) may mean an STAG not including a serving cell (or including only a non-serving cell(s)/candidate cell(s)).

In STAG type 1, when the time alignment timer of an STAG (for example, a serving STAG) expires, the same UE operation as that of the existing systems (for example, Rel. 17 or earlier versions) may be employed partially/entirely.

In STAG type 2, when the time alignment timer of an STAG (for example, a non-serving STAG) expires, a corresponding non-serving cell/candidate cell may be deactivated/made in-active (for example, deactivated/in-active). This is because UL synchronization becomes out of synchronization, which makes it difficult to schedule data transmission in the candidate cell for a UE (related serving cell maintains a function) and thereby causes the necessity that a PRACH is triggered for the candidate cell to obtain timing advance before the data transmission.

For example, when a time alignment timer expires, the following operation (for example, the given operation for PTAG/given operation for STAG) may be performed.

### {Given Operation for PTAG}

In a case where the time alignment timer is associated with a PTAG,
- flush all the HARQ buffers of all serving cells.
- notify RRC of release of a PUCCH, if configured, for all the serving cells.
- notify RRC of release of an SRS, if configured.
- clear all configured DL assignments and configured UL assignments.
- clear a PUSCH resource for semi-persistent CSI reporting.
- cause all running time alignment timers to expire.
- maintain N_{TA} of all TAGs.

### {Given Operation for STAG}

In a case where the time alignment timer is associated with an STAG including a serving cell(s) (for example, STAG type 1), for all the serving cell(s) belonging to the TAG,
- flush all HARQ buffers.
- notify RRC of release of a PUCCH, if configured.
- notify RRC of release of an SRS, if configured.
- clear all configured DL assignments and UL assignments.
- clear a PUSCH resource for semi-persistent CSI reporting.
- maintain N_{TA} of the TAG.
- may deactivate a candidate cell(s) included in the STAG/make the candidate cell(s) in-active.

In a case where the time alignment timer is associated with an STAG not including a serving cell(s) (for example, STAG type 2), for all the non-serving cell(s)/candidate cell(s) belonging to the TAG,
- deactivate the candidate cell(s)/make the candidate cell(s) in-active.

UE operation for the deactivated/in-active candidate cell(s) may be different from UE operation for a serving cell(s) partially. For example, aspects 1 to 4 of the first embodiment may be applied as the UE operation for the deactivated/in-active candidate cell(s).

### {Aspect 2-4}

In aspect 2-4, restriction on cells sharing the same TAG ID (or restriction on configuration of TAG IDs) will be described.

In TAG configuration, at least one restriction on option 2-4-1 and option 2-4-2 below may be applied.

### <<Option 2-4-1>>

A plurality of candidate cells having the same frequency band (for example, the same center frequency) may be configured not to be configured with the same TAG ID. In other words, only candidate cells associated with different frequencies (for example, center frequencies) may be configured with the same TAG ID.

### <<Option 2-4-2>>

TAG IDs (0, 1, ...) may be assigned first to a specific cell (for example, a serving cell) and then to other cells (for example, candidate cells). Aspect 2-4 may be applied to aspect 2-1 to aspect 2-3.

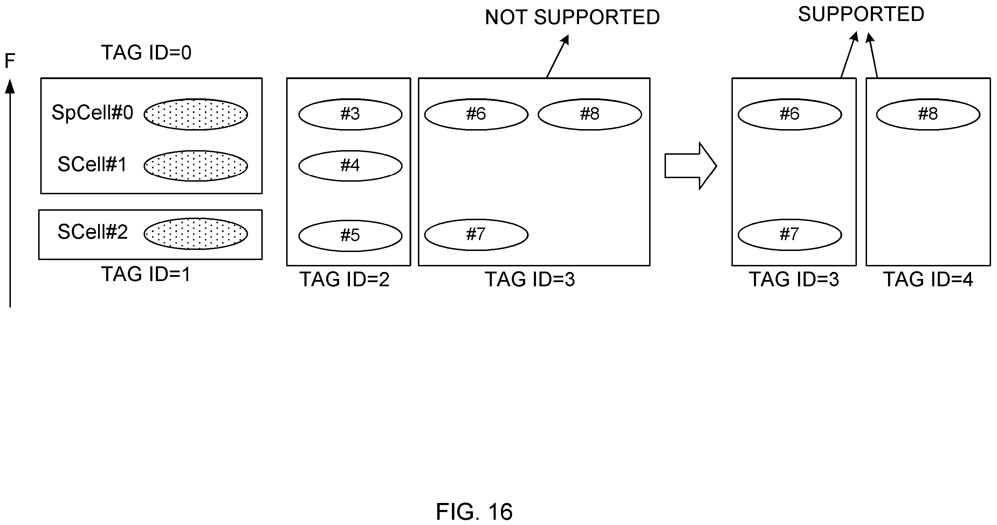

FIG. 16 shows a case where SpCell #0, SCell #1, and SCell #2 are configured as serving cells, and candidate cells #2 to #10 are configured for a cell group (or a MAC entity/MCG/SCG).

In FIG. 16, SpCell #0 and SCell #1 are included in the same TAG (here, TAG ID = 0), and SCell #2 is included in a different TAG (here, TAG ID = 1). Candidate cells #3 to #5 are included in the same TAG (here, TAG ID = 2), and candidate cells #6 to #8 are included in the same TAG (here, TAG ID = 3).

When the restriction on option 2-4-1 is applied, the same TAG ID cannot be configured for candidate cells having the same frequency (for example, center frequency). In this case, candidate cell #6 and candidate cell #8 cannot be included in the same TAG (here, TAG ID = 3).

In this case, candidate cell #6 and candidate cell #8 are included in different TAGs (here, candidate cell #6 is included in TAG ID = 3, and candidate cell #8 may be included in a different TAG ID (for example, TAG ID = 4).

When the restriction on option 2-4-2 is applied, TAG IDs are assigned to the serving cells and then to candidate cells.

### <Third Embodiment>

In a third embodiment, an example of timing advance control (for example, definition/configuration of a TAG ID/PTAG/STAG) in a case where configuration example 3 of candidate cells is employed.

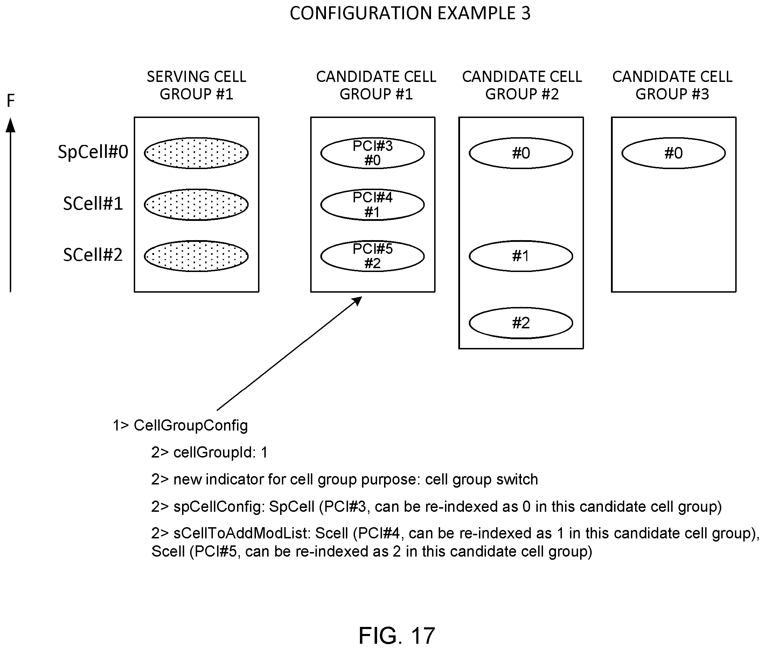

In the following description, a case where one or more candidate cell groups (or cell group candidates) are configured for a given cell group (for example, an MCG or an SCG)/MAC entity (configuration example 3) will be described. Each candidate cell group may include one or more candidate cells (see FIG. 17).

FIG. 17 shows a case where SpCell #0, SCell #1, and SCell #2 are configured as serving cells or where a serving cell group including SpCell #0, SCell #1, and SCell #2 is configured. Also shown is a case where candidate cell groups #1 and #2 each including candidate cells #0 to #2 and candidate cell group #3 including candidate cell #0 are configured in addition to the serving cell group. Note that the number of serving cells to be configured, the number of candidate cell groups, the number of candidate cells included in each candidate cell group, and the like are examples and are not restrictive.

A UE may receive configuration information including at least one of information related to the configured candidate cell groups and information related to the candidate cell(s) included in each candidate cell group. The configuration information may be received by RRC/MAC CE/DCI. The candidate cell groups may be configured separately or configured commonly for an MCG and an SCG.

In the example shown in FIG. 17, candidate cells #0 to #2 included in candidate cell group #1 each have the same frequency as that of any of the serving cells. Part of the candidate cells (here, #0 and #1) included in candidate cell group #2 may each have the same frequency as that of any of the serving cells, while the other candidate cell (here, #2) may have a different frequency from those of the serving cells. The frequency may be a center frequency.

By a given higher layer parameter (for example, CellGroupConfig), the ID of the cell group (here, 1), a configuration indicating the purpose/use of the cell group, an SpCell configuration (for example, spCellConfig), and a list of SCells (for example, sCellToAddModList) may be configured for a UE.

### {Aspect 3-1}

For L1/L2 inter-cell mobility, when each candidate cell is associated with a TAG ID, one PTAG may be defined/configured for each candidate cell group.

In the candidate cell group, a candidate cell(s) for which a PTAG is configured (candidate cell(s) included in the PTAG) may be a given candidate cell(s). The given candidate cell(s) may be at least one of a candidate cell associated with an SpCell, a candidate cell having the same frequency as that of the SpCell (for example, center frequency), and a candidate cell having a given ID (for example, #0).

Alternatively, the candidate cell(s) included in the PTAG in each candidate cell group may be configured for/indicated to a UE by RRC/MAC CE/DCI.

When a PTAG is configured for each candidate cell group, at least one of option 3-1-1 to option 3-1-3 below may be used to control definition/configuration of TAG IDs.

### <<Option 3-1-1>>

For each candidate cell group, TAG IDs may start from 0. In other words, IDs of the PTAG of each candidate cell group may have 0. In this case, at least one of between a serving cell group and a candidate cell group and between different candidate cell groups, PTAGs/STAGs having the same TAG ID may be supported.

### <<Option 3-1-2>>

TAG IDs of the serving cell group (for example, the MCG or the SCG) and candidate cell groups for the cell group may have different values. For example, a global TAG ID for the candidate cell groups corresponding to the serving cell group may be configured for each MAC entity/MCG/SCG for cell group switch.

In other words, for the MCG and the candidate cell groups of the MCG, TAG IDs may start from 0. For the SCG and the candidate cell groups of the SCG, TAG IDs may start from 0. In this case, TAG IDs (0, 1, ...) may be assigned first to a serving cell group/serving cells and then to the candidate cell groups/candidate cells. Alternatively, TAG IDs may be assigned first to the PTAG of the serving cells and the PTAG of the candidate cell groups and thereafter to the STAG(s) of the serving cells and the STAG(s) of the candidate cell groups.

### <<Option 3-1-3>>

TAG IDs may be configured irrespective of candidate cell groups. For example, the same TAG may be configured for candidate cells in different candidate cell groups.

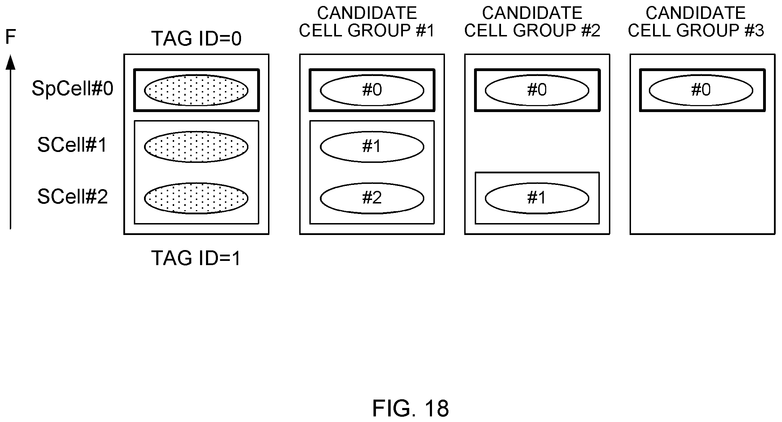

FIG. 18 shows an example of a case where a PTAG is configured for each of one or more candidate cell groups configured for a given cell group (for example, an MCG or an SCG). In FIG. 18, SpCell #0, SCell #1, and SCell #2 are configured as serving cells. Moreover, candidate cell groups #1 to #3 are configured for the cell group (or the MAC entity/MCG/SCG). Shown is a case where candidate cell group #1 includes candidate cells #0 to #2, candidate cell group #2 includes candidate cells #0 and #1, and candidate cell group #3 includes candidate cell #0.

FIG. 18 shows a case where the TAG including SpCell #0 (here, TAG ID = 0) is a PTAG and the TAG including candidate cell #0 included in each candidate cell groups is a PTAG (or PTAG is configured based on candidate cell #0 included in each candidate cell group). Also shown is a case where serving cells SCell #1 and SCell #2 are included in the same TAG (here, TAG ID = 1) and candidate cells #1 and #2 of candidate cell group #1 are included in the same TAG.

When option 3-1-1 is applied, the TAG ID of the PTAG included in each candidate cell group may be defined/configured as 0. The TAG ID of the TAG (or STAG) including candidate cells #1 and #2 of candidate cell group #1 may be configured as 1.

When option 3-1-2 is applied, the TAG ID of the PTAG included in each candidate cell group may be defined/configured separately (for example, a value other than 0). For example, different TAG IDs may be configured for the PTAG of the serving cells, the STAG of the serving cells, the PTAGs of the candidate cell groups, and the STAGs of the candidate cell groups. Through this, timing advance for the serving cells and the candidate cells can be configured flexibly.

### {Aspect 3-2}

When cell groups are switched by L1/L2 signaling, any of candidate cell groups turns to be a serving cell group. Meanwhile, the previous serving cell group may be changed/updated to a candidate cell group. When switching of cell groups is performed, at least one of option 3-2-1 and option 3-2-2 below may be employed as configuration of TAG IDs.

### <<Option 3-2-1>>

When TAG IDs start from 0 in each candidate cell group (for example, when option 3-1-1 is applied), the TAG IDs are configured separately for respective candidate cell groups. In this case, before and after switching of cell groups, change/update of TAG IDs may be unnecessary.

In this case, TAGs may be determined jointly by TAG IDs and candidate cell group IDs of each MAC entity. In a MAC CE including indication of a TAG ID (for example, a MAC CE of an existing system), a new field indicating a candidate cell group ID may be added.

### <<Option 3-2-2>>

When different TAG IDs are assigned to the PTAG of the serving cells and the PTAG of the candidate cell groups (for example, option 3-1-2 is applied), the TAG IDs are configured for respective MAC entities. In this case, TAG IDs may be determined based on at least one of option 3-2-2A and option 3-2-2B below.

### {{Option 3-2-2A}}

When cell groups are switched, TAG IDs need not be changed/updated. In this case, the TAG ID of the new PTAG may take a value (ID) other than 0 (Alt. 3A).

### {{Option 3-2B}}

When cell groups are switched, TAG IDs may be changed/updated. For example, TAGs of new cell groups (new serving cell groups) may start from 0. In this case, the ID of the PTAG of the new serving cell groups may be changed/updated to 0, and the ID of the STAG being the cell groups changed to candidate cells (previous serving cell group) may start from 1.

The PTAG (new STAG) of the original (previous) serving cell groups may be changed/updated to take a value (ID) other than 0. In this case, the TAG ID of the PTAG of the original cell groups may be determined based on at least one of Alt. 3B-1 and Alt. 3B-2 below.

### - Alt. 3B-1

For the PTAG of the original cell groups (or original PTAG), one or more TAG IDs may be configured by a higher layer parameter. When the serving cell group is changed/updated to a candidate cell group by switching of cell groups, a UE may use a TAG ID configured in advance for the candidate cell group after the change.

Alternatively, information related to a TAG ID used for each TAG after switching (for example, TAG switched to an STAG) may be indicated to the UE by using L1/L2 signaling indicating switching of an SpCell. For example, a plurality of candidates for the TAG ID may be configured by a higher layer parameter, and a specific TAG ID may be indicated by L1/L2 signaling (for example, DCI).

### - Alt. 3B-2

A UE may expect/assume that a base station transmits RRC/MAC CE/DCI to update a TAG ID(s), instead of updating/exchanging the TAG ID(s) autonomously.

### {Aspect 3-3}

When a time alignment timer configured for each TAG expires, a UE performs given operation (or is defined/configured with given UE operation).

For the current serving cell groups, a PTAG and an STAG may have the same meaning as that of a PTAG and an STAG of an existing system (for example, Rel. 17 or previous versions). In this case, when a time alignment timer expires, the same operation as that in such an existing system may be applied to UE operation for the PTAG/STAG.

Meanwhile, for the candidate cell groups, a PTAG and an STAG are different from a PTAG and an STAG of an existing system (for example, Rel. 17 or previous versions). Hence, for a candidate cell group, a new PTAG type (or UE operation for PTAG) and a new STAG type (or UE operation for STAG) may be supported.

For example, PTAG type 2 (for example, a non-serving PTAG or the PTAG of candidate cell groups) may mean a PTAG not including a serving cell (or including only a non-serving cell(s)/candidate cell(s)) or a PTAG of candidate cell groups.

For example, STAG type 2 (for example, a non-serving STAG or an STAG of candidate cell groups) may mean an STAG not including a serving cell (or including only a non-serving cell(s)/candidate cell(s)) or an STAG of the candidate cell groups.

When the time alignment timer corresponding to a PTAG/STAG of the candidate cell groups expires, a candidate cell(s) included in the candidate cell group may be deactivated/made in-active (for example, deactivated/in-active).

For example, when such a time alignment timer expires, the following operation (for example, the given operation for PTAG/given operation for STAG) may be performed.

### {Given Operation for PTAG}

In a case where the time alignment timer is associated with a PTAG of the serving cell groups,
- flush all the HARQ buffers of all serving cells.
- notify RRC of release of a PUCCH, if configured, for all the serving cells.
- notify RRC of release of an SRS, if configured.
- clear all configured DL assignments and configured UL assignments.
- clear a PUSCH resource for semi-persistent CSI reporting.
- cause all running time alignment timers to expire.
- maintain N_{TA} of all TAGs.

In a case where the time alignment timer is associated with a PTAG of the candidate cell groups (PTAG type 2),
- deactivate the candidate cell(s) included in the candidate cell group/make the candidate cell(s) in-active.

### {Given Operation for STAG}

In a case where the time alignment timer is associated with an STAG including a serving cell(s) (for example, STAG type 1), for all the serving cell(s) belonging to the TAG,
- flush all HARQ buffers.
- notify RRC of release of a PUCCH, if configured.
- notify RRC of release of an SRS, if configured.
- clear all configured DL assignments and UL assignments.
- clear a PUSCH resource for semi-persistent CSI reporting.
- maintain N_{TA} of the TAG.

In a case where the time alignment timer is associated with an STAG of the serving cell groups (for example, STAG type 2), for all the non-serving cell(s)/candidate cell(s) belonging to the TAG,
- deactivate a candidate cell(s)/make the candidate cell(s) in-active.

PTAG type 2/STAG type 2 may be one new same type (for example, candidate TAG type for candidate cell group). The TAG may include only a candidate cell(s). When the time alignment timer corresponding to a candidate TAG expires, a candidate cell(s) included in the candidate TAG may be deactivated/made in-active.

UE operation for the deactivated/in-active candidate cell(s) may be different from UE operation for a serving cell(s) partially. For example, aspects 1 to 4 of the first embodiment may be applied as the UE operation for the deactivated/in-active candidate cell(s).

### {Aspect 3-4}

In aspect 3-4, restriction on cells sharing the same TAG ID (or restriction on configuration of a TAG ID) will be described.

In TAG configuration, at least one restriction on option 3-4-1 and option 3-4-2 below may be applied.

### <<Option 3-4-1>>

The same TAG ID may be configured only for candidate cells in the same candidate cell group. In other words, only candidate cells included in the same candidate cell group may be configured with the same TAG ID. Meanwhile, the same TAG ID may be configured not to be configured for candidate cells in different candidate cell groups.

### <<Option 3-4-2>>

The same TAG ID may be configured for candidate cells in different candidate cell groups.

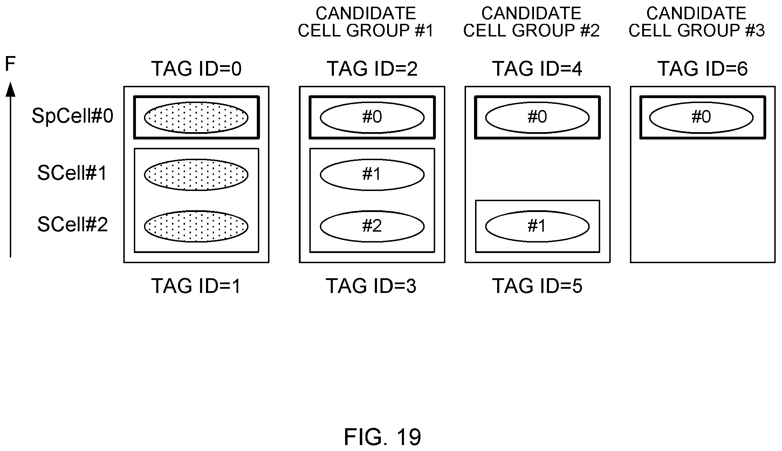

FIG. 19 shows an example of a case where a serving cell group including SpCell #0, SCell #1, and SCell #2 being serving cells and candidate cell groups #1 to #3 are configured. Shown is a case where candidate cell group #1 includes candidate cells #0 to #2, candidate cell group #2 includes candidate cells #0 and #1, and candidate cell group #3 includes candidate cell #0.

FIG. 19 also shows a case where the TAG including SpCell #0 (here, TAG ID = 0) is a PTAG and the TAG including candidate cell #0 included in each candidate cell group is a PTAG. Specifically, the TAG including candidate cell #0 in candidate cell group #1 (here, TAG ID = 2) is a PTAG, the TAG including candidate cell #0 in candidate cell group #2 (here, TAG ID = 4) is a PTAG, and the TAG including candidate cell #0 in candidate cell group #3 (here, TAG ID = 6) is a PTAG.

Also shown is a case where serving cells SCell #1 and SCell #2 are included in the same TAG (here, TAG ID = 1), candidate cells #1 and #2 of candidate cell group #1 are included in the same TAG (here, TAG ID = 3), and candidate cell #5 in candidate cell group #2 is included in a TAG (here, TAG ID = 5).

FIG. 19 shows an example of a case where the restriction on option 3-4-1 is applied. Here, shown is a case where candidate cells (candidate cells #1 and #2) in the same candidate cell group (candidate cell group #1) have the same TAG ID (= 3).

### <Supplements>

At least one of the above-described embodiments may be applied only to a UE that has reported specific UE capability or that supports the specific UE capability.

The specific UE capability may indicate at least one of the following:
- supporting of one or a plurality of PTAGs
- supporting of switching/change of a PTAG (autonomously by the UE or by base station signaling)
- supporting of switching/change of a TAG ID (autonomously by the UE or by base station signaling)
- supporting of two different STAG types (for example, serving STAG and non-serving STAG)
- supporting of two different PTAG types (for example, serving PTAG and non-serving PTAG)
- supporting of activation/deactivation of a candidate cell in L1/L2 inter-cell mobility (for example, by RRC/MAC CE/DCI)
- supporting of a deactivation timer for each candidate cell/each candidate cell group
- supporting of restriction on TAG configuration

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or per frequency division duplex (FDD)).

At least one of the above-described embodiments may be applied when the UE is configured with specific information related to the above-described embodiment by higher layer signaling.

The UE may apply, for example, Rel-15/16/17 operation when the UE does not support at least one of the specific UE capabilities or is not configured with the specific information.

### (Supplementary Notes)

Regarding one embodiment of the present disclosure, the following supplementary notes of the invention will be given.

### {Supplementary Note 1-1}

A terminal including: a receiving section that receives configuration information related to a plurality of serving cells and candidate cells associated with the plurality of serving cells respectively; and a control section that controls, when configuration of a timing advance group (TAG) ID is supported for the plurality of serving cells and the candidate cells, UL transmission, based on the timing advance group ID, wherein one primary TAG or a plurality of primary TAGs are configured for the plurality of serving cells and the candidate cells.

### {Supplementary Note 1-2}

The terminal according to supplementary note 1-1, wherein, when any of the candidate cells is switched to a special cell, the control section controls to change the TAG ID corresponding to the candidate cell switched to the special cell.

### {Supplementary Note 1-3}

The terminal according to supplementary note 1-1 or 1-2, wherein when a time alignment timer corresponding to a TAG not including any of the serving cells or a TAG including any of the candidate cells expires, the candidate cell is deactivated.

### {Supplementary Note 1-4}

The terminal according to any one of supplementary notes 1-1 to 1-3, wherein, when a plurality of the candidate cells are associated with a same serving cell, different TAG IDs are configured for the plurality of candidate cells respectively.

### {Supplementary Note 2-1}

A terminal including: a receiving section that receives configuration information related to a plurality of serving cells belonging to a cell group and a candidate cell associated with the cell group; and a control section that controls, when a configuration of a timing advance group (TAG) ID is supported for the plurality of serving cells and the candidate cell, UL transmission, based on the timing advance group ID, wherein one primary TAG is configured for the cell group.

### {Supplementary Note 2-2}

The terminal according to supplementary note 2-1, wherein, when the candidate cell is switched to a special cell, the control section controls to change the TAG ID corresponding to the candidate cell switched to the special cell.

### {Supplementary Note 2-3}

The terminal according to supplementary note 2-1 or 2-2, wherein when a time alignment timer corresponding to a secondary TAG not including any of the serving cells or a secondary TAG including the candidate cell expires, the candidate cell included in the secondary cell is deactivated.

### {Supplementary Note 2-4}

The terminal according to any one of supplementary notes 2-1 to 2-3, wherein, when a plurality of candidate cells having a same frequency as a frequency of any of the serving cells, different TAG IDs are configured for the plurality of candidate cells respectively.

### {Supplementary Note 3-1}

A terminal including: a receiving section that receives configuration information related to a plurality of serving cells belonging to a cell group, a candidate cell group, and a candidate cell included in the candidate cell group; and a control section that controls, when a configuration of a timing advance group (TAG) ID is supported for the plurality of serving cells and the candidate cell, UL transmission, based on the timing advance group ID, wherein a primary TAG is configured per candidate cell group.

### {Supplementary Note 3-2}

The terminal according to supplementary note 3-1, wherein IDs of primary TAGs included in different candidate cell groups respectively are configured to be a same value.

### {Supplementary Note 3-3}

The terminal according to supplementary note 3-1 or 3-2, wherein, when the candidate cell group is switched to a serving cell group, the control section controls not to change a TAG ID.

### {Supplementary Note 3-4}

The terminal according to any one of supplementary notes 3-1 to 3-3, wherein, when a time alignment timer corresponding to a TAG including the candidate cell expires, the candidate cell is deactivated.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

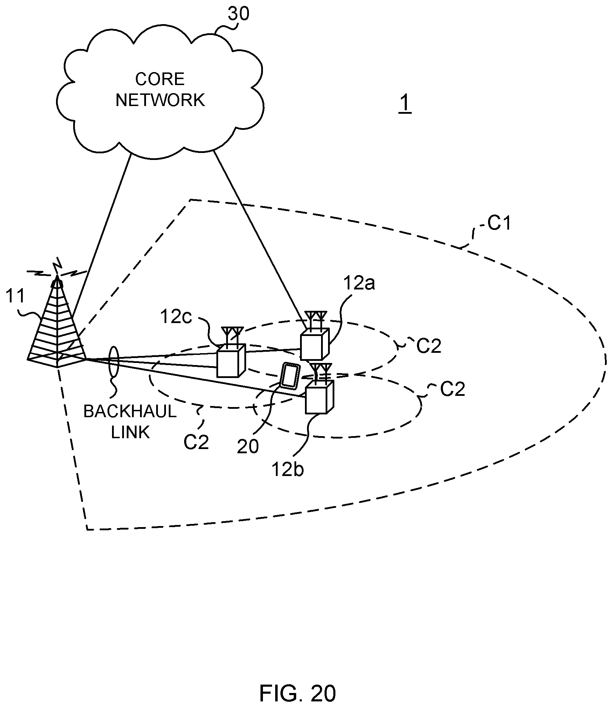

FIG. 20 is a diagram to show an example of a schematic structure of the radio communication system according to one embodiment. The radio communication system 1 (which may be referred to simply as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and operation, administration and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block **(SSB),"** and so on. Note that an SS, an SSB, and so on may be referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference **Signal)."**

### (Base Station)

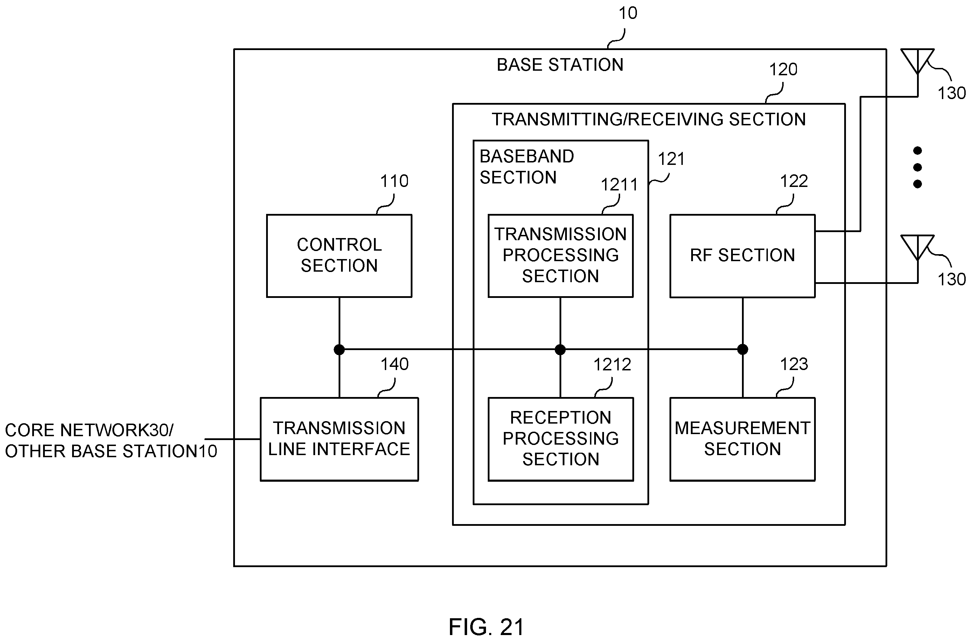

FIG. 21 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node that provides an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit configuration information related to a plurality of serving cells and candidate cells associated with the plurality of serving cells respectively. The control section 110 may indicate a timing advance group (TAG) ID corresponding to the plurality of serving cells and the candidate cells. For the plurality of serving cells and the candidate cells, one primary TAG or a plurality of primary TAGs may be configured.

The transmitting/receiving section 120 may transmit configuration information related to a plurality of serving cells belonging to a cell group and a candidate cell associated with the cell group. The control section 110 may indicate a timing advance group (TAG) ID for the plurality of serving cells and the candidate cell. For the cell group, one primary TAG may be configured.

The transmitting/receiving section 120 may transmit configuration information related to a plurality of serving cells belonging to a cell group, a candidate cell group, and a candidate cell included in the candidate cell group. The control section 110 may indicate a timing advance group (TAG) ID for the plurality of serving cells and the candidate cell. One primary TAG may be configured per cell group.

### (User Terminal)

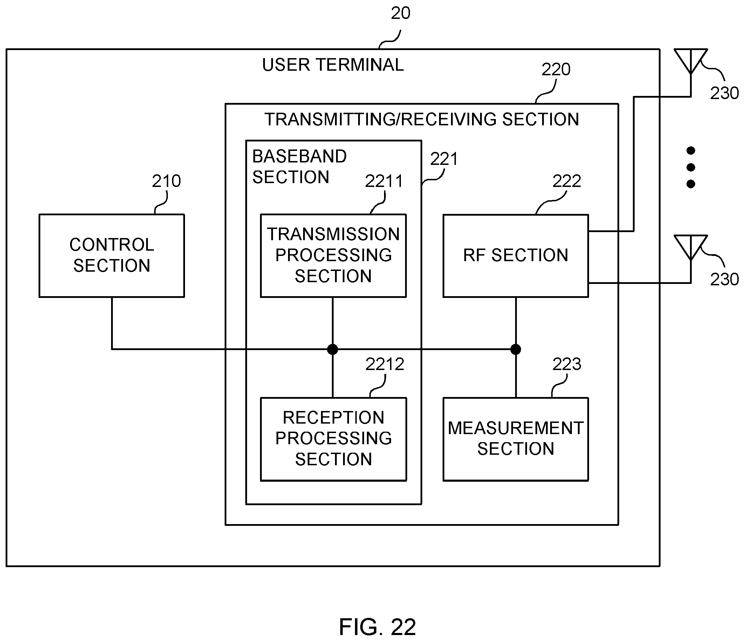

FIG. 22 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive configuration information related to a plurality of serving cells and candidate cells associated with the plurality of serving cells respectively. When configuration of a timing advance group (TAG) ID is supported for the plurality of serving cells and the candidate cells, the control section 210 may control UL transmission, based on the timing advance group ID. For the plurality of serving cells and the candidate cells, one primary TAG or a plurality of primary TAGs may be configured.

When any of the candidate cells is switched to a special cell, the control section 210 may control to change a TAG ID corresponding to the candidate cell switched to the special cell. When a time alignment timer corresponding to a TAG not including any of the serving cells or a TAG including any of the candidate cells expires, the control section 210 may control to deactivate the candidate cell (or control by assuming deactivation of the candidate cell). When a plurality of the candidate cells are associated with a same serving cell, different TAG IDs may be configured for the plurality of candidate cells respectively.

The transmitting/receiving section 220 may receive configuration information related to a plurality of serving cells belonging to a cell group and a candidate cell associated with the cell group. When configuration of a timing advance group (TAG) ID is supported for the plurality of serving cells and the candidate cell, the control section 210 may control UL transmission, based on the timing advance group ID. For the cell group, one primary TAG may be configured.

When the candidate cell is switched to a special cell, the control section 210 may control to change a TAG ID corresponding to the candidate cell switched to the special cell. When a time alignment timer corresponding to a secondary TAG not including any of the serving cells or a secondary TAG including the candidate cell expires, the control section 210 may control to deactivate the candidate cell included in the secondary cell (or control by assuming deactivation of the candidate cell). When a plurality of candidate cells having a same frequency as a frequency of any of the serving cells are configured, different TAG IDs may be configured for the plurality of candidate cells respectively.

The transmitting/receiving section 220 may receive configuration information related to a plurality of serving cells belonging to a cell group, a candidate cell group, and a candidate cell included in the candidate cell group. When configuration of a timing advance group (TAG) ID is supported for the plurality of serving cells and the candidate cell, the control section 210 may control UL transmission, based on the timing advance group ID. One primary TAG may be configured per candidate cell group.

The IDs of primary TAGs included in different candidate cell groups respectively may be configured to be the same value. When the candidate cell group is switched to a serving cell group, the control section 210 may control not to change a TAG ID. When a time alignment timer corresponding to a TAG including the candidate cell expires, the control section 210 may control to deactivate the candidate cell (or control by assuming deactivation of the candidate cell).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

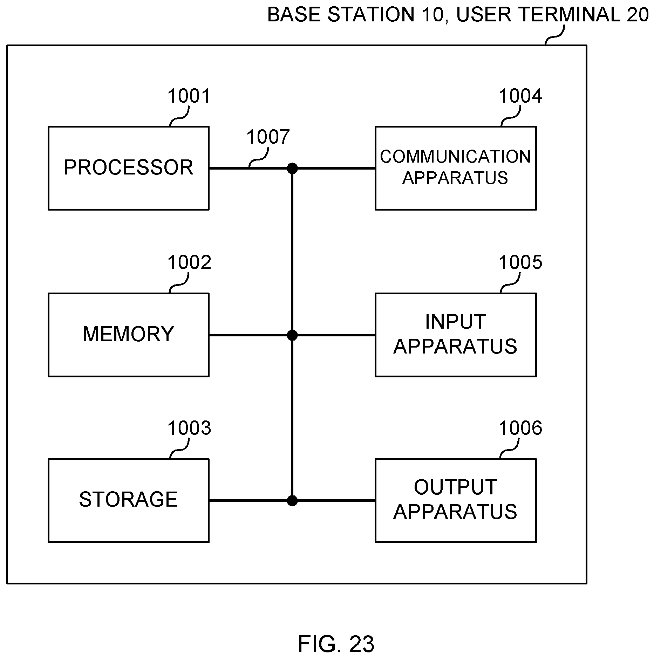

For example, a base station, a user terminal, and so on according to one embodiment of the present disclosure may function as a computer that executes the processes of the radio communication method of the present disclosure. FIG. 23 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

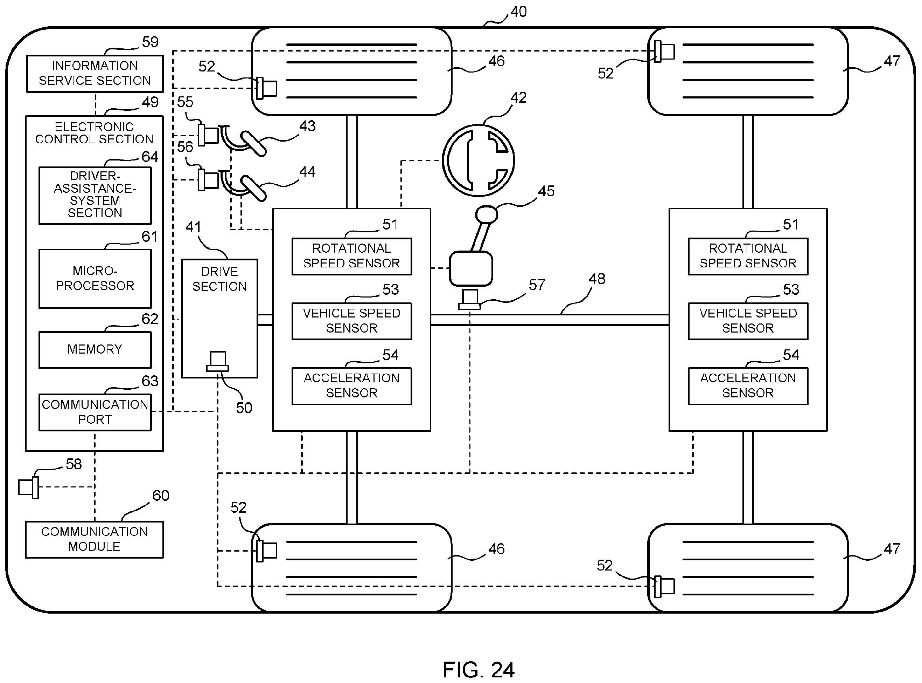

FIG. 24 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device **(D2D)",** "Vehicle-to-Everything **(V2X)",** and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives configuration information related to a plurality of serving cells and candidate cells associated with the plurality of serving cells respectively; and
a control section that controls, when configuration of a timing advance group (TAG) ID is supported for the plurality of serving cells and the candidate cells, UL transmission, based on the timing advance group ID, wherein
one primary TAG or a plurality of primary TAGs are configured for the plurality of serving cells and the candidate cells.

2. The terminal according to claim 1, wherein
when any of the candidate cells is switched to a special cell, the control section controls to change the TAG ID corresponding to the candidate cell switched to the special cell.

3. The terminal according to claim 1, wherein
when a time alignment timer corresponding to a TAG not including any of the serving cells or a TAG including any of the candidate cells expires, the candidate cell is deactivated.

4. The terminal according to claim 1, wherein
when a plurality of the candidate cells are associated with a same serving cell, different TAG IDs are configured for the plurality of candidate cells respectively.

5. A radio communication method for a terminal, the radio communication method comprising:
receiving configuration information related to a plurality of serving cells and candidate cells associated with the plurality of serving cells respectively; and
controlling, when configuration of a timing advance group (TAG) ID is supported for the plurality of serving cells and the candidate cells, UL transmission, based on the timing advance group ID, wherein
one primary TAG or a plurality of primary TAGs are configured for the plurality of serving cells and the candidate cells.

6. A base station comprising:
a transmitting section that transmits configuration information related to a plurality of serving cells and candidate cells associated with the plurality of serving cells respectively; and
a control section that indicates timing advance group (TAG) IDs corresponding to the plurality of serving cells and the candidate cells, wherein
one primary TAG or a plurality of primary TAGs are configured for the plurality of serving cells and the candidate cells.
